(19) Europäisches Patentamt
European Patent Office
Office européen des brevets

(11) EP 0 558 990 B1

(12) EUROPÄISCHE PATENTSCHRIFT

(45) Veröffentlichungstag und Bekanntmachung des Hinweises auf die Patenterteilung: **04.09.1996 Patentblatt 1996/36**

(51) Int. Cl.[6]: **C08G 77/42**, C08G 77/46

(21) Anmeldenummer: **93102389.9**

(22) Anmeldetag: **16.02.1993**

# (54) Polymerblend aus mindestens zwei Polymeren und einem Compatibilizer

Polymer blend consisting of at least two polymers and a comptabilizer

Alliage de polymères à partir d'au moins deux polymères et d'un agent comptabilisant

(84) Benannte Vertragsstaaten:
**BE DE FR GB NL**

(30) Priorität: **28.02.1992 DE 4206191**

(43) Veröffentlichungstag der Anmeldung:
**08.09.1993 Patentblatt 1993/36**

(73) Patentinhaber: **Th. Goldschmidt AG**
**D-45127 Essen (DE)**

(72) Erfinder:
- **Rossmy, Gerd, Dr.**
  **W-4358 Haltern-Lavesum (DE)**
- **Spiegler, Roland D., Dr.**
  **Midlothian, VA 23112 (US)**
- **Venzmer, Joachim, Dr.**
  **Midlothian, VA 23112 (US)**

(56) Entgegenhaltungen:
**EP-A- 0 125 779**
**EP-A- 0 165 849**
**EP-A- 0 355 826**
**EP-A- 0 459 705**
**WO-A-90/14369**
**US-A- 4 659 777**

- **JOURNAL OF POLYMER SCIENCE, PART A: POLYMER CHEMISTRY EDITION Bd. 27, Nr. 11, Oktober 1989, NEW YORK, US Seiten 3673 - 3690 I. YILGOR ET AL. 'Novel Triblock Siloxane Copolymers: Synthesis, Characterization, and Their Use as Surface Modifying Additives'**

EP 0 558 990 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Rank Xerox (UK) Business Services
2.13.4/3.4

## Beschreibung

Die Erfindung betrifft Polymerblends, bestehend aus mindestens zwei ohne weitere Zusätze miteinander nicht mischbaren und sich in bezug auf ihre Polarität oder ihre Hydrophilie unterscheidenden Polymeren A und B und mindestens einem Compatibilizer.

Ein Weg zur Herstellung von Polymerwerkstoffen mit maßgeschneiderten Eigenschaften ist die Vermengung von zwei oder mehreren Polymeren mit unterschiedlichen Eigenschaftsprofilen zu einem Polymergemisch, das im Sinne der vorliegenden Erfindung als "Polymerblend" bezeichnet wird. Da die meisten Polymere aus thermodynamischen Gründen auf molekularer Ebene nicht mischbar sind, resultieren mehrphasige Systeme, wobei im allgemeinen Domänen eines Polymeren in einer Matrix des zweiten Polymeren vorliegen. Neben den spezifischen Eigenschaften der einzelnen Phasen bestimmen die Anzahl, Gestalt, Anordnung und Größenverteilung (im folgenden "Mikrostruktur" genannt) dieser Domänen sowie deren Haftung zur Matrix den resultierenden Werkstoff.

Die Art und Weise der physikalischen Vermengung und die Grenzflächenspannungen zwischen den einzelnen Phasen bestimmen die Mikrostruktur des Polymerblends. Die aufgrund der chemischen Unverträglichkeit meist relativ hohe Grenzflächenspannung zwischen den Domänen und der Matrix erlaubt jedoch meist nur die Herstellung relativ grobdisperser Polymerblends mit geringer Grenzflächenhaftung. Daher sind Additive entwickelt worden, die als Compatibilizer oder Verträglichkeitsbrücken bezeichnet werden. Sie sind in der Lage, die Grenzflächenspannung zu erniedrigen und ermöglichen die Herstellung feindisperser Polymerblends mit guter Adhäsion zwischen den einzelnen Phasen.

Compatibilizer für ein Blend aus zwei nicht mischbaren Polymeren A und B setzen sich entsprechend dem Stand der Technik aus mindestens zwei Segmenten C und D in Form von Block- und Pfropfcopolymeren zusammen, wobei eine Vergrößerung des Segmentes C (bzw. D) eine Verbesserung der Mischbarkeit mit Polymer A (bzw. B), jedoch zwangsläufig gleichzeitig eine Verringerung der Mischbarkeit mit Polymer B (bzw. A) zur Folge hat. Die Mischbarkeit kann über die jeweiligen binären Phasendiagramme ermittelt werden, wobei eine Verbesserung (bzw. Verringerung) der Mischbarkeit eine Vergrößerung (bzw. Verkleinerung) des Einphasengebietes bedeutet. Diese Verbesserung der Mischbarkeit bzw. Vergrößerung des Einphasengebietes wird im Rahmen vorliegender Erfindung als Verbesserung der "Kompatibilität" bezeichnet.

Die Wirkung von Block- und Pfropfcopolymeren als grenzflächenspannungserniedrigendes Agens für Polymerblends wird z.B. in P. Bahadur und G. Riess, Tenside Surf. Det. 28 (1991), S. 173 bis 179 und T. A. Vilgis und J. Noolandi, Macromolecules 23 (1990), S. 2941 bis 2947, allgemein beschrieben.

In der DE-OS 39 09 273 wird diese Reduktion der Grenzflächenspannung zur Modifizierung der Mikrostruktur des Polymerblends verwendet: So zeigen Mischungen aus gleichen Teilen Polypropylen und Polyamid bei Zusatz von 2 % eines Pfropfcopolymeren eine um einen Faktor 8 bis 10 verringerte Polyamidteilchengröße in einer Polypropylenmatrix gegenüber Blends, die ohne Zusatz eines Copolymeren auf gleiche Weise hergestellt wurden. Durch Zusatz des Copolymeren wird darüber hinaus die Haftung zwischen den Polymeren verbessert und die IZOD-Stoßfestigkeit deutlich erhöht.

Mischungen aus 40 bis 80 % eines thermoplastischen Polyamids, 15 bis 50 % eines Polyolefins und 2 bis 10 % eines Poly-1,3-dien-polyamid-blockcopolymeren zeigen gemäß DE-OS 36 10 596 eine verbesserte Kerbschlagzähigkeit und Reißdehnung gegenüber den entsprechenden Rezepturen ohne Blockcopolymer.

Der Zusatz von 10 % Pfropfcopolymeren zu 70 bis 80 % thermoplastischen aromatischen Poly(ester)carbonaten und 15 bis 20 % thermoplastischen Polyurethanen verbessert die Wechselknickfestigkeit von spritzgegossenen Prüfstäben nach EP-A-0 337 206.

Das US-Patent 4 954 579 beschreibt die zähigkeitserhöhende Wirkung von 1 bis 5 % Polyalkyloxazolin-polycarbonat-polyalkyloxazolin-triblockcopolymeren auf Mischungen von 60 % Polycarbonat und 40 % Polyamid.

Ein Nachteil der bisher beschriebenen Compatibilizer liegt insbesondere darin, daß nur ein Teil der eingesetzten Menge an der Grenzfläche zur Verfügung steht, weil der Compatibilizer in den Bulkphasen A und B i.a. micellar löslich ist.

Die vorliegende Erfindung befaßt sich mit diesem technischen Problem und in erster Linie mit der Aufgabe, Compatibilizer mit verbesserter Wirksamkeit bereitzustellen. Sie befaßt sich insbesondere mit der Aufgabe, Compatibilizer zu entwickeln, welche bevorzugt an den Grenzflächen zwischen den Bulkphasen A und B angereichert sind.

Gegenstand der vorliegenden Erfindung sind somit Polymerblends, bestehend aus mindestens zwei ohne weitere Zusätze miteinander nicht mischbaren und sich in bezug auf ihre Polarität oder ihre Hydrophilie unterscheidenden Polymeren A und B und mindestens einem Compatibilizer mit dem Kennzeichen, daß als Compatibilizer ein ternäres Copolymer der Struktur $(A^1)_m$-E-$(B^1)_n$, wobei

| | |
|---|---|
| $A^1$ | ein Rest ist, der die Kompatibilität des Copolymeren $(A^1)_m$-E-$(B^1)_n$ mit dem Polymeren A gewährleistet, |
| $B^1$ | ein Rest ist, der die Kompatibilität des Copolymeren $(A^1)_m$-E-$(B^1)_n$ mit dem Polymeren B gewährleistet, |
| E | ein Polysiloxanblock ist, an den jeweils mindestens 1 Rest $A^1$ und $B^1$ gebunden ist, |
| m und n | ganze Zahlen $\geq 1$ sind, |

in einer Menge von 0,01 bis 10 Gew.-%, bezogen auf Polymerblend, enthalten ist.

Ein wesentlicher Vorteil der in den erfindungsgemäßen Polymerblends enthaltenen neuartigen Compatibilizern besteht darin, daß sie zusätzlich zu den Segmenten $A^1$ und $B^1$ ein weiteres Segment E in Form eines Siloxanblockes enthalten, das mit den Polymeren A und B unverträglich ist, d.h. durch Vergrößerung des Segments E wird die Mischbarkeit des Compatibilizers sowohl in Polymer A als auch in Polymer B verringert. Die Triebkraft des Compatibilizers zur Wanderung an die Grenzfläche ist gegenüber den herkömmlichen Compatibilizern aufgrund der geringeren Löslichkeit in den Bulkphasen erhöht. Damit wird bei gleichem Gehalt an Compatibilizer die Grenzflächenspannung zwischen den Polymeren A und B wesentlich stärker reduziert.

Die Compatibilizer mit den Segmenten $A^1$, $B^1$ und E können blockartig aufgebaut sein, wobei die Komponente E als mittlerer Block fungiert oder kammartig, wobei die Segmente $A^1$ und $B^1$ auf die Komponente E aufgepfropft sind. Entsprechend der Werte der Indices m und n können die Segmente $A^1$ und $B^1$ mehrfach enthalten sein.

Besonders bevorzugt sind Polymerblends, welche als ternäres Copolymer eine Verbindung der allgemeinen Formel

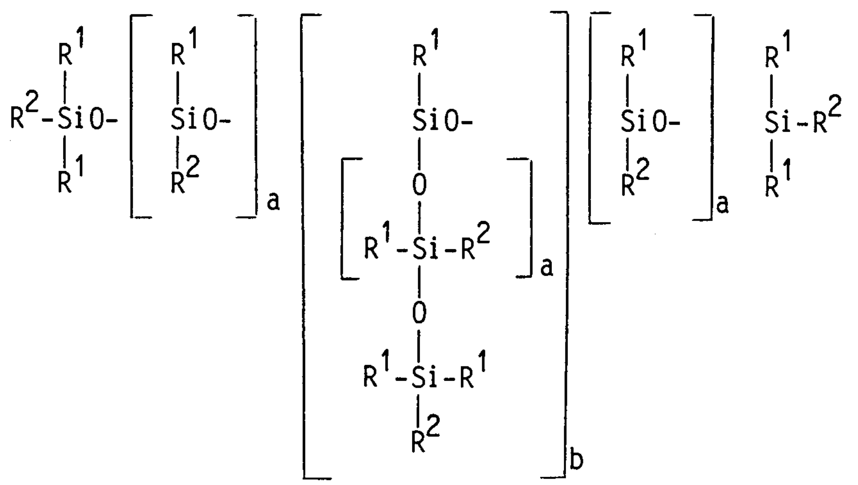

I

wobei

- $R^1$ Alkyl- oder Phenylreste sind, jedoch mindestens 90 % der Reste $R^1$ Methylreste sind,
- $R^2$ die Bedeutung der Reste $R^1$ haben oder die Reste $A^1$ oder $B^1$ sind, mit der Maßgabe, daß im durchschnittlichen Molekül mindestens 1 Rest $R^2$ ein Rest $A^1$ und 1 Rest $R^2$ ein Rest $B^1$ ist,
- a einen Wert von 1 bis 1000 und
- b einen Wert von 0 bis 10 hat,

enthalten.

Die Reste $R^1$ können Alkylreste, insbesondere solche mit 1 bis 4 Kohlenstoffatomen, oder Phenylreste sein. Innerhalb des Polysiloxanblocks können die Reste $R^1$ auch unterschiedliche Bedeutung haben, jedoch sollen 90 % der Reste $R^1$ Methylreste sein.

a hat vorzugsweise einen Wert von 1 bis 200.

Besonders bevorzugt sind Polymerblends, bei denen der Compatibilizer ein ternäres Copolymer der vorgenannten Formel ist, in welcher der Index b = 0 ist und die Reste $R^1$ Methylreste sind.

Die erfindungsgemäßen Polymerblends enthalten die Compatibilizer in einer Menge von 0,01 bis 10 Gew.-%, bezogen auf Polymerblend, insbesondere in einer Menge von 0,1 bis 2 Gew.-%.

Die chemische Struktur der Reste $A^1$ und $B^1$ richtet sich nach der Struktur der Polymeren A und B. Um eine Kompatibilität mit dem Polymer A bzw. B sicherzustellen, ist es sinnvoll, die Reste in bezug auf ihren strukturellen Aufbau und damit auch in bezug auf ihre Polarität bzw. Hydrophilie dem Polymer A bzw. B anzugleichen. Dabei kann der Verbund mit dem Polymeren durch eine chemische Verknüpfung über reaktive Gruppen gefestigt werden.

Die Verknüpfung der Reste $A^1$ und $B^1$ mit dem Siloxansegment E kann durch eine SiOC- oder SiC-Bindung erfolgen.

Die Verknüpfung über eine SiOC-Bindung kann durch Umsetzung einer SiCl-Gruppe des entsprechenden Chlorpolysiloxans mit einer Hydroxylgruppe der Verbindung $A^1OH$ bzw. $B^1OH$ erhalten werden. Sie erfolgt nach dem Reaktionsschema:

$$\equiv Si\text{-}Cl + HO\text{-}C\equiv \rightarrow \equiv Si\text{-}O\text{-}C\equiv + HCl$$

Entsprechend dem Stand der Technik erfolgt die Reaktion in Gegenwart eines Säureakzeptors, wie z.B. Ammoniak, oder eines Amins.

Die SiOC-Verknüpfung kann auch durch Umsetzung einer Alkoxygruppe eines entsprechenden Alkoxypolysiloxans mit einer Hydroxylgruppe der Verbindung $A^1OH$ bzw. $B^1OH$ bewirkt werden:

$$\equiv Si\text{-}OR + HO\text{-}C\equiv \rightarrow \equiv Si\text{-}O\text{-}C\equiv + ROH$$

Hydrolysestabiler als die SiOC-Bindung ist die SiC-Bindung. Sollen die Reste $A^1$ und $B^1$ mit dem Siloxansegment über eine SiC-Bindung verknüpft werden, geht man im allgemeinen von Wasserstoffsiloxanen aus, an die Verbindungen mit einer olefinischen Doppelbindung in Gegenwart von geeigneten Hydrosilylierungskatalysatoren, wie z.B. Platin oder Platinverbindungen, angelagert werden:

$$\equiv SiH + H_2C\text{=}CH\text{-} \rightarrow \equiv Si\text{-}CH_2\text{-}CH_2\text{-}$$

Beispiele solcher SiC-verknüpfender Brückenglieder sind:
$-(CH_2)_x-$, wobei x eine ganze Zahl $\geqq 2$ ist, $-(CH_2)_2O-$,

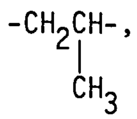

$-(CH_2)_3OCH_2-$,

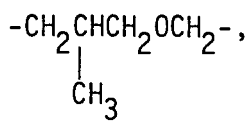

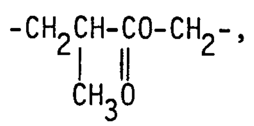

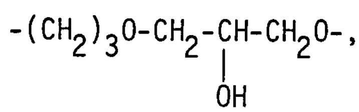

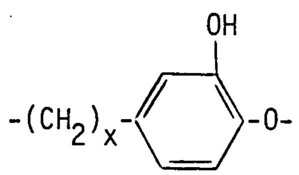

,

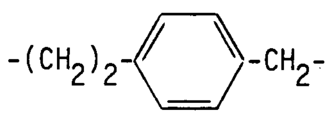

Bei diesen Brückengliedern erfolgt die Verbindung zu einem Siliciumatom des Siloxansegmentes über die an der linken Seite der Gruppe gezeigte Valenz, z.B. $\equiv Si\text{-}(CH_2)_x\text{-}$ oder $\equiv Si\text{-}(CH_2)_3OCH_2\text{-}$.

Es ist dem Fachmann verständlich, daß die Begriffspaare unpolar/polar und hydrophob/hydrophil in bezug auf die Polymeren A und B relativ zu verstehen sind. So ist zum Beispiel ein Polyester gegenüber einem Polyolefin die stärker polare Komponente, während der Polyester gegenüber einem Polyether die Weniger polare Komponente sein kann.

Polare bzw. hydrophile Polymere können zum Beispiel Polyether, Polyester, Polyamide, Polyacrylate und Polyurethane sein.

Beispiele für unpolare bzw. hydrophobe Polymere sind Polyolefine und deren halogenierte Derivate sowie Polyaromaten.

Eine bevorzugte Ausführungsform der Erfindung ist deshalb darin zu sehen, daß, falls das Polymer A das, verglichen mit dem Polymeren B, polarere oder hydrophilere Polymer ist, $A^1$ ein polarer Polyetherrest, ein Polyalkyloxazolin-, ein Polyamid-, ein Polyester- oder ein polar funktionalisierter Alkylrest, und $B^1$ ein geradkettiger oder verzweigter Alkylrest, ein alkylsubstituierter, unpolarer Polyetherrest oder ein Polystyrolrest ist.

Als Alkylreste sind beispielsweise Polyethylen-, Polypropylen- und Polybutylenreste sowie deren Copolymere (z.B. Reste aus hydrogeniertem Polybutadien) zu verwenden.

Beispiele alkylsubstituierter, unpolarer Polyetherreste sind solche, welche die Struktureinheit

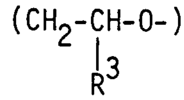

ausschließlich
oder anteilig enthalten, in der $R^3$ ein Alkylrest mit 1 bis 20 Kohlenstoffatomen ist. Dabei können in dem Polymermolekül die Reste $R^3$ gleich oder verschieden sein.

Geeignete polare Polyetherreste können die Struktureinheit $-(C_2H_4O-)_n(C_3H_6O-)_m$, wobei in der Regel n = 2 bis 200 und m = 0 bis 100 ist, enthalten.

Als Polyalkyloxazolinrest kommt insbesondere der Polymethyl- oder Polyethyloxazolinrest in Frage.

Als Polyesterrest kommt insbesondere der Polycaprolactonrest in Frage.

Beispiele polar funktionalisierter Alkylreste sind Alkylreste mit Hydroxy-, Amino-, Carboxy-, Sulfonat- oder Sulfatgruppen.

Beispiele erfindungsgemäßer Compatibilizer sind

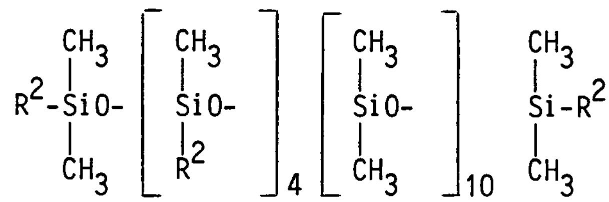

$R^2$ = 40 % $-(CH_2)_{15}CH_3$
60 % $-(CH_2)_3(C_2H_4O)_4(C_3H_6O)_{10}C_3H_7$

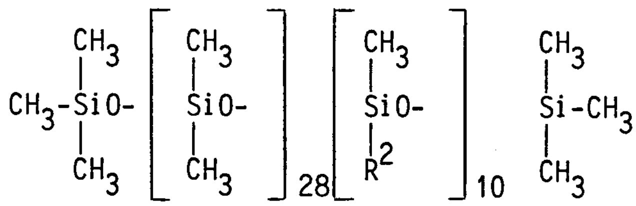

$R^2$ = 80 % $-(CH_2)_{15}CH_3$
20 % $-(CH_2)_3(O-CH_2-CH_2)_{25}(O-CH_2-CH(CH_3))_{25}OH$

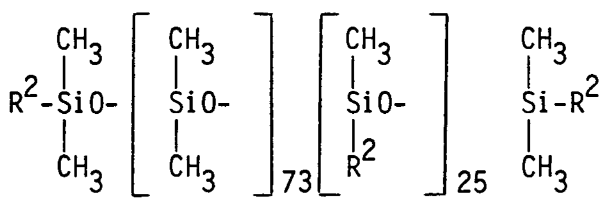

$R^2$ = 50 % $-(CH_2)_{29}CH_3$

50 % 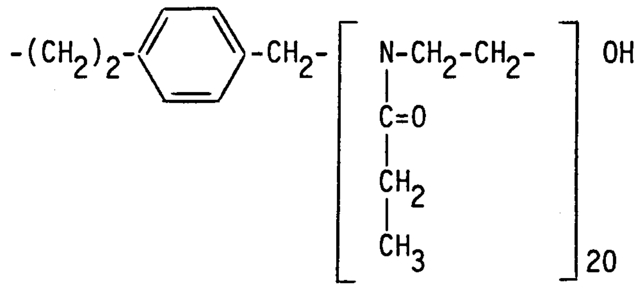

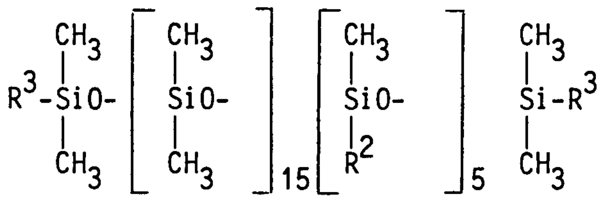

$R^2$ = $-(CH_2)_3(O-CH_2-CH_2-)_{22}O-CH_3$

$R^3$ =

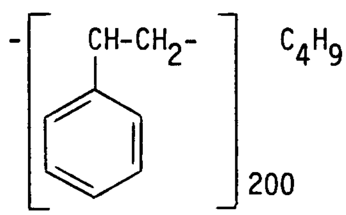

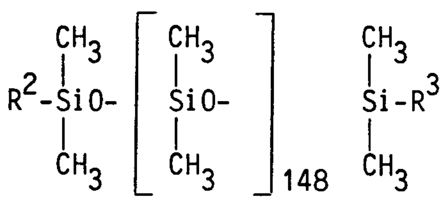

$R^2$ =

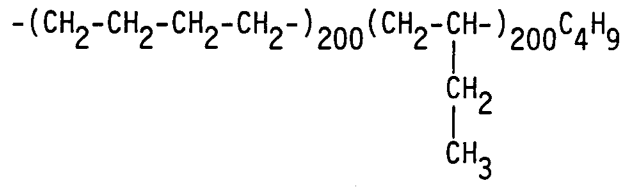

$R^3$ =

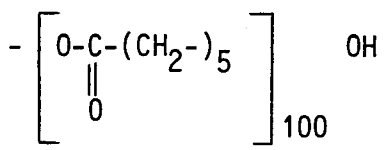

Die Erniedrigung der Grenzflächenspannung in einem Polymersystem A + B durch Zugabe eines Compatibilizers kann mit Hilfe aus der Literatur bekannter Methoden an Modellsystemen studiert werden. Dazu werden Polymere verwendet, die aus den gleichen oder chemisch sehr ähnlichen Monomereinheiten wie die den Polymeren A bzw. B zugrundeliegenden aufgebaut sind und deren Molekulargewichte MG einerseits niedrig genug sind, um eine Messung der Grenzflächenspannung in der Praxis zu ermöglichen (i.a.: MG < 10 000 g/Mol) und andererseits groß genug sind, um die wesentlichen Eigenschaftsmerkmale der Polymeren A bzw. B aufzuweisen (i.a.: MG > 1000 g/Mol) (Beispiele 1, 3 und 4). Die Auswahl geeigneter Compatibilizer bzw. die Bestimmung des Grades ihrer Kompatibilität kann darüber hinaus, wie bereits erwähnt, durch Messung der Phasendiagramme erfolgen. Aus meßtechnischen Gründen ist es dabei zweckmäßig, wie auch im Falle der Messung der Grenzflächenspannungen, ein niedermolekulares Modellsystem zu verwenden (Beispiel 2). Die Verringerung der Partikelgröße eines Polymeren B in einer Matrix eines Polymeren A durch Zugabe der erfindungsgemäß einzusetzenden Compatibilizer ist in den Beispielen 3, 5 und 6 gezeigt.

Beispiel 1

Reduktion der Grenzflächenspannung in dem Polymersystem Polyetherpolyol/Polyolefin durch Zugabe der erfindungsgemäßen Compatibilizer

Wie bereits dargelegt, ist die Reduktion der Grenzflächenspannung zwischen zwei Polymeren A und B eine entscheidende Funktion eines Compatibilizers. Für eine experimentelle Bestimmung der Grenzflächenspannung zwischen zwei Flüssigkeiten sind mehrere Verfahren bekannt, darunter die "Spinning Drop"-Methode, für die entsprechende Tensiometer kommerziell erhältlich sind.

Polymersystem

Als Polymere wurden gewählt:

Als Modellsubstanz für ein hydrophobes Polyolefin ein synthetisches Wachs, leicht verzweigt, Schmelzpunkt < -34°C, Dichte 0,86 g/cm$^3$ bei 25°C, im Handel unter der Bezeichnung Vybar 825 von der Firma Petrolite erhältlich.

Als Modellsubstanz für ein nicht mit dem Polyolefin mischbares hydrophileres Polymer A ein Polyethertriol, Molekulargewicht 3500, OH-Zahl 48, sekundäre OH-Gruppen, 10 bis 12 Gew.-% Ethylenoxid (Rest Propylenoxid) in den Polyetherketten, Dichte 1,02 g/cm$^3$ bei 25°C, im Handel unter der Bezeichnung Voranol 3512 von der Firma Dow Chemical erhältlich.

Beide Polymere sind bei Raumtemperatur flüssig und entsprechen damit dem Aggregatzustand der Polymere bei der Herstellung von Polymerblends. Das im Vergleich zu industriell zur Herstellung von Polymerblends verwendeten Polymeren relativ niedrige Molekulargewicht dieser Komponenten ermöglicht eine direkte Messung der Grenzflächenspannung, was bei hochmolekularen Polymeren aufgrund der viskositätsbedingten sehr langsamen Gleichgewichtseinstellung und den erforderlichen hohen Temperaturen in der Praxis nicht möglich ist.

Compatibilizer

Als erfindungsgemäße Compatibilizer werden ternäre Copolymere der Formel (I), wobei

b = 0 ist,
die Reste $R^1$ und die $\alpha,\omega$-ständigen Reste $R^2$ gleich Methylreste
und die sonstigen Reste $R^2$ gleich Methylreste oder Reste $A^1$ oder Reste $B^1$,

wobei

Rest $A^1$ gleich

$$-(CH_2)_3-(O-CH_2-CH_2)_y-(O-CH_2-CH(CH_3))_zOH$$

und Rest $B^1$ gleich

$$-(CH_2)_x-CH_3$$

ist,

sind, verwendet. Die Reste $A^1$ erhöhen die Mischbarkeit und damit die Verträglichkeit des ternären Copolymers mit dem Polyetherpolyol Voranol 3512, die Reste $B^1$ entsprechend mit dem Wachs Vybar 825. Die Erhöhung der Mischbarkeit wird mit Hilfe von Phasendiagrammen in Beispiel 2 für den Rest $A^1$ demonstriert.

Messung der Grenzflächenspannung

Die Grenzflächenspannung zwischen den flüssigen Polymeren wird mit dem Spinning Drop-Tensiometer SITE 04 der Firma Krüss, Hamburg, gemessen. Ein Tropfen der spezifisch leichteren Phase wird dabei in eine rotierende Kapillare, die mit der spezifisch schwereren Phase gefüllt ist, eingebracht. Der rotierende Tropfen (spinning drop) bildet eine zylinderähnliche Gleichgewichtsform aus, als Ergebnis des Wechselspiels zwischen der Zentrifugalkraft, die die spezifisch leichtere Phase in Richtung der Rotationsachse elongiert, und der Grenzflächenspannung zwischen den Phasen, die die Elongation einbremst. Aus dem Gleichgewichtsdurchmesser des Tropfens, dem Dichteunterschied der beiden Phasen und der Winkelgeschwindigkeit der Kapillare läßt sich die Grenzflächenspannung berechnen. Das Spinning Drop-Tensiometer ist besonders gut zur Messung sehr kleiner Grenzflächenspannungen, wie sie in diesem Beispiel auftreten, geeignet. Eine ausführliche Beschreibung der Methode findet sich in: H. M. Princen, I. Y. Z. Zia und S. G. Mason, Measurement of Interfacial Tension from the Shape of a Rotating Drop, Journal of Colloid and Interfacial Science 23, S. 99 bis 107 (1967).

Erniedrigung der Grenzflächenspannung

Die folgende Tabelle zeigt Grenzflächenspannungen bei 70°C zwischen Voranol 3512 und Vybar 825 für verschiedene ternäre Copolymere nach Formel (I) mit b = 0, Resten $R^1$ und $\alpha,\omega$-ständigen Resten $R^2$ gleich Methylresten, und m + n Seitenketten $A^1$ und $B^1$. Um den Einfluß der unterschiedlich langen, seitenständigen Reste $A^1$ und $B^1$ auf die Grenzflächenspannung besser vergleichen zu können, werden die Gewichtsanteile dieser Seitenketten relativ zum Gewicht aller Seitenketten angegeben.

| Gew.-% Copolymer | Siloxanrückgrat | | Seitenketten | | γ (mN/m) |
|---|---|---|---|---|---|
| | a | m+n | $A^1$ | $B^1$ | |
| - | - | - | | | 3,05 |
| (Einfluß des Polyethers) | | | | | |
| 0,2 | 19 | 10 | 50 Gew.-%,y= 9,z= 0 | 50 Gew.-%,x=15 | 0,90 |
| 0,2 | 19 | 10 | 50 Gew.-%,y=13,z= 4 | 50 Gew.-%,x=15 | 0,50 |
| 0,2 | 19 | 10 | 50 Gew.-%,y=14,z=14 | 50 Gew.-%,x=15 | 0,30 |
| 0,2 | 19 | 10 | 50 Gew.-%,y=30,z=30 | 50 Gew.-%,x=15 | 0,18 |
| (Einfluß der Siloxanlänge) | | | | | |
| 0,2 | 4 | 4 | 50 Gew.-%,y=14,z=14 | 50 Gew.-%,x=15 | 2,20 |
| 5,0* | 4 | 4 | 50 Gew.-%,y=14,z=14 | 50 Gew.-%,x=15 | 0,19 |
| 0,2 | 9 | 5 | 50 Gew.-%,y=14,z=14 | 50 Gew.-%,x=15 | 1,02 |
| <2,0* | 9 | 5 | 50 Gew.-%,y=14,z=14 | 50 Gew.-%,x=15 | 0,26 |
| 0,2 | 19 | 10 | 50 Gew.-%,y=14,z=14 | 50 Gew.-%,x=15 | 0,96 |
| 0,4* | 19 | 10 | 50 Gew.-%,y=14,z=14 | 50 Gew.-%,x=15 | 0,30 |
| <0,2* | 49 | 25 | 50 Gew.-%,y=14,z=14 | 50 Gew.-%,x=15 | 0,32 |
| (Einfluß der Anzahl der Seitenketten) | | | | | |
| <2,0* | 9 | 5 | 50 Gew.-%,y=14,z=14 | 50 Gew.-%,x=15 | 0,26 |
| <2,0* | 9 | 7 | 50 Gew.-%,y=14,z=14 | 50 Gew.-%,x=15 | 0,20 |
| (Einfluß des Verhältnisses der Seitenketten) | | | | | |
| 0,2 | 19 | 10 | 50 Gew.-%,y= 4,z=11 | 50 Gew.-%,x=15 | 1,36 |
| 0,2 | 19 | 10 | 70 Gew.-%,y= 4,z=11 | 30 Gew.-%,x=15 | 1,20 |
| 0,2 | 19 | 10 | 85 Gew.-%,y= 4,z=11 | 15 Gew.-%,x=15 | 1,98 |
| (niedrigste Grenzflächenspannungen) | | | | | |
| 3,0 | 4 | 4 | 80 Gew.-%,y=25,z=25 | 20 Gew.-%,x=15 | 0,05 |
| 9,0 | 4 | 4 | 80 Gew.-%,y=25,z=25 | 20 Gew.-%,x=15 | 0,03 |

*(Sättigungskonzentration)

Die Tabelle zeigt, daß die ternären Copolymeren, sofern die Struktur und die Anzahl der Seitenketten $A^1$ und $B^1$ günstig gewählt sind, schon in sehr geringen Konzentrationen (0,2 Gew.-%) die Grenzflächenspannung des Polymersystems auf ein zehntel bis zwanzigstel des ursprünglichen Wertes reduzieren können. Hohe Konzentrationen (3 bis 9 Gew.-%) ermöglichen sogar eine Reduktion auf ein hundertstel des ursprünglichen Wertes.

Zur Optimierung der ternären Copolymere können folgende Faustregeln verwendet werden (vergleiche obige Tabelle):

i) langkettige Siloxanrückgrate (große a-Werte nach Formel (I)) bewirken eine Grenzflächenaktivität der Copolymere schon bei sehr geringen Konzentrationen,

ii) kurzkettige Siloxanrückgrate (kleine a-Werte nach Formel (I)) ergeben die niedrigsten Grenzflächenspannungen, allerdings unter Einsatz höherer Copolymerkonzentrationen,

iii) lange Seitenketten $A^1$ und $B^1$ sind günstig.

Beispiel 2

Bestimmung der Kompatibilität durch Messung der Phasendiagramme Polymer/Compatibilizer

Geeignete Compatibilizer können u.a. durch Bestimmung der beiden binären Phasendiagramme Polymer A/Compatibilizer und Polymer B/Compatibilizer ausgewählt werden. Sie zeichnen sich i.a. durch eine beschränkte Mischbarkeit mit beiden Polymerphasen aus. Im Falle von hochmolekularen Polymeren ist die Bestimmung der Phasendiagramme in der Regel sehr aufwendig, weshalb in der Praxis auf niedermolekulare Modellsysteme zurückgegriffen wird, für welche qualitativ die gleichen Gesetzmäßigkeiten gelten. Im folgenden wird zunächst gezeigt, wie die Mischbarkeit eines erfindungsgemäßen Compatibilizers durch die Anzahl und Struktur der Seitengruppen $A^1$ (Polyether) mit dem Polymeren A (Polyetherpolyol) beeinflußt wird.

Messung der Phasendiagramme

Mischungen eines zu untersuchenden Compatibilizers und des Polyetherpolyols Voranol 3512 in den Gewichtsverhältnissen 1 : 9, 3 : 7, 5 : 5, 7 : 3 und 9 : 1 werden in Reagenzgläser (Füllhöhe ca. 3 cm) gefüllt und in einen Durchsichtthermostaten gegeben. Eine zweckmäßige Beleuchtung, ein kontrastreicher Hintergrund (z.B. eine schwarz-weiße Schraffur) und eine klare Badflüssigkeit ermöglichen eine visuelle Unterscheidung zwischen trüben und klaren Mischungen. Die Temperatur des Thermostaten wird innerhalb ca. 6 Stunden von 20 auf 200°C erhöht und wieder auf 20°C gesenkt. Die Mischungen werden mit einem Glasstab von Zeit zu Zeit homogenisiert. Dabei wird die Temperatur einer beginnenden Eintrübung oder einer vollständigen Klärung einer Mischung notiert. Mit diesen Werten wird in einer Auftragung der Temperatur gegen die Zusammensetzung (dem Phasendiagramm) die Mischungslücke, d.h. der Temperatur-Zusammensetzungsbereich trüber Mischungen, skizziert. Die doppelte Bestimmung der Mischungslücke beim Aufheizen und beim Wiederabkühlen läßt den Einfluß kinetischer Effekte erkennen; verwendet werden die jeweiligen Mittelwerte. Wo der Verlauf der Mischungslücke unklar ist, werden weitere Trübungs- bzw. Klärungspunkte für Mischungen mit den entsprechenden Gewichtsverhältnissen bestimmt.

Kompatibilität

Die Kompatibilität der Reste $A^1$ und $B^1$ der erfindungsgemäßen Compatibilizer mit den zu vermengenden Polymeren wird am Beispiel des Polyetherrestes $A^1$ aus Beispiel 1 gezeigt. Dieser Polyetherrest $A^1$ ist kompatibel mit dem Polyetherpolyol Voranol 3512 aus Beispiel 1. Demnach führt eine Erhöhung der Anzahl der Reste $A^1$ am Copolymer oder eine Verlängerung dieser Reste zu einer erhöhten Verträglichkeit (Kompatibilität) des Copolymers mit dem Polyetherpolyol (und gleichzeitig zu einer verringerten Verträglichkeit mit dem Wachs). Die Kompatibilität läßt sich mit Hilfe der Phasendiagramme quantifizieren: Eine große Mischungslücke im Phasendiagramm zweier Komponenten deutet auf eine geringe Kompatibilität zwischen diesen Komponenten hin und umgekehrt.

Die Phasendiagramme in Fig. 1 und Fig. 2 zeigen, daß sich die Kompatibilität des ternären Copolymeren mit Voranol 3512 erhöhen läßt durch

(i) Erhöhung der Anzahl der mit Voranol kompatiblen Polyetherreste $A^1$ (Phasendiagramm, Fig. 1) oder durch
(ii) Verlängerung der Polyetherreste $A^1$ (Phasendiagramm, Fig. 2).

Die Erhöhung der Kompatibilität ist dabei in der Verkleinerung der schraffierten Mischungslücken zu sehen (die heller schraffierten Bereiche umfassen jeweils zusätzlich die dunkler schraffierten Bereiche).

Auswahl geeigneter Compatibilizer

Ein geeigneter Compatibilizer zeichnet sich u.a. dadurch daß er die Grenzflächenspannung zwischen den zu vermengenden Polymeren A und B möglichst stark reduziert. Extrem niedrige Grenzflächenspannungen treten in Systemen auf, die Mikroemulsionen bilden. Obwohl die Modifizierung der Bulkphasen, die in diesem Falle eintritt, in der Regel unerwünscht ist, läßt sich aus der Theorie der Microemulsionen (siehe auch: M. Kahlweit und R. Strey, Phasenverhalten ternärer Systeme des Typs $H_2O$ - Öl - nichtionisches Amphiphil (Microemulsionen), Angewandte Chemie 97, S. 655 bis 669 (1985)) eine Strategie zur Optimierung von Compatibilizern für Polymerblends ableiten. Danach sollten die niedrigsten Grenzflächenspannungen dann erreicht werden, wenn - neben anderen Bedingungen - das binäre Phasendiagramm Compatibilizer/Polymer A, wobei das Polymer A die hydrophile Komponente relativ zu Polymer B ist, eine geschlossene Mischungslücke aufweist.

Exemplarisch werden die Phasendiagramme für einen weniger (Fig. 3), mehr (Fig. 4) und am besten (Fig. 5) geeigneten Compatibilizer gezeigt (Mischungslücken sind schwarz hinterlegt) und mit den in Beispiel 1 ermittelten Grenzflächenspannungen verglichen. Für diese drei Compatibilizer wird im System Voranol 3512/Vybar 825/Compatibilizer

(70°C) als minimale Grenzflächenspannung gemessen: 1,26 mN/m, 0,34 mN/m bzw. 0,03 mN/m. Die Korrelation zwischen Phasenverhalten und Grenzflächenspannung entspricht damit den theoretischen Erwartungen.

Beispiel 3

Erniedrigung der Grenzflächenspannung und Verringerung der Partikelgröße in Polymerdispersionen im System Polyetherpolyol/Polyolefin durch Anwendung der erfindungsgemäßen Compatibilizer

Als Polymere werden gewählt:

Voranol 3512 aus Beispiel 1
und
ein Polypropylenwachs, Erweichungspunkt 158°C, Dichte 0,88 g/cm$^3$ bei 25°C, Viskosität 1500 cPs bei 170°C, im Handel unter der Bezeichnung PP 230 von der Firma Farbwerke Hoechst AG erhältlich.

Die hier verwendeten Compatibilizer sind bereits in Beispiel 1 beschrieben.

Messung der Grenzflächenspannung

Die Messung der Grenzflächenspannung bei erhöhten Temperaturen (d.h. oberhalb des Schmelzpunktes des Polypropylenwachses) erfolgt mit der Sessile Drop-Methode. Als Gerät wird ein Kontaktwinkelgoniometer G1 der Firma Krüss, Hamburg, verwendet. Dabei wird ein Tropfen der spezifisch schwereren Phase auf eine Teflonunterlage gesetzt, die in einer Küvette liegt, die mit der spezifisch leichteren Phase gefüllt ist. Unter der Voraussetzung, daß die schwere Phase das Teflon nicht benetzt (Kontaktwinkel > 90°), bildet der Tropfen eine Gleichgewichtsform aus, als Ergebnis des Wechselspiels zwischen der Schwerkraft, die den Tropfen abflacht, und der Grenzflächenspannung zwischen den Phasen, die einer Vergrößerung der Grenzfläche entgegenwirkt. Aus der Gleichgewichtsform des Tropfens (Radius am Äquator, Höhe über dem Äquator), dem Dichteunterschied der beiden Phasen und der Erdbeschleunigung läßt sich die Grenzflächenspannung berechnen (A.W. Porter, Phil. Mag. 15 (1933) 163 - 170). Eine Beschreibung der Methode findet sich u.a. in: J.T. Koberstein, Interfacial Properties, in: Encyclopedia of Polymer Science and Engineering, 2nd ed., Vol. 8, S. 237, New York 1987.

Herstellung der Dispersionen

Zur Herstellung der Dispersionen werden 10 Gew.-% Polypropylenwachs PP 230 und 90 Gew.-% Voranol 3512 (Gesamtmenge: 22 g) mit dem Compatibilizer in einem 100-ml-Becherglas vorgelegt und auf 185°C aufgeheizt. Bei dieser Temperatur wird die Mischung 5 Minuten mit einem Ultra-Turrax T 25/18 G von Ika-Works bei halber Leistung (ca. 12000 rpm) gerührt, anschließend wird unter Rühren bei niedrigster Leistung (ca. 8000 rpm) in einem Wasserbad abgekühlt. Die mittlere Größe der dispergierten Wachsteilchen wird mit einem Phasenkontrast-Mikroskop in Transmission ausgemessen.

Teilchengrößen

Folgende Tabelle zeigt die mittleren Größen d der in Voranol dispergierten Polypropylenteilchen unter Verwendung verschiedener ternärer Copolymere.

| Gew.-% Copolymer | Siloxanrückgrat | | Seitenketten | | d(µm) | σ(mN/m) |
|---|---|---|---|---|---|---|
| | a | m+n | A[1] | B[1] | | |
| - | - | - | | | 220,0 | 2,7 |
| 3,0 | 4 | 4 | 80 Gew.-%,y=25,z=25 | 20 Gew.-%,x=15 | 100 | 1,8 |
| (Einfluß der Copolymermenge) | | | | | | |
| 0,1 | 19 | 10 | 50 Gew.-%,y=30,z=30 | 50 Gew.-%,x=15 | 53,0 | |
| 0,5 | 19 | 10 | 50 Gew.-%,y=30,z=30 | 50 Gew.-%,x=15 | 39,0 | |
| 2,0 | 19 | 10 | 50 Gew.-%,y=30,z=30 | 50 Gew.-%,x=15 | 17,0 | |
| (Einfluß des Verhältnisses der Seitenketten) | | | | | | |
| 2,0 | 19 | 10 | 60 Gew.-%,y=30,z=30 | 40 Gew.-%,x=15 | 16,2 | |
| 2,0 | 19 | 10 | 75 Gew.-%,y=30,z=30 | 25 Gew.-%,x=15 | 5,0 | 0,63 |
| 2,0 | 19 | 10 | 85 Gew.-%,y=30,z=30 | 15 Gew.-%,x=15 | 13,5 | |
| 2,0 | 19 | 10 | 90 Gew.-%,y=30,z=30 | 10 Gew.-%,x=15 | 100 | 1,6 |
| 2,0 | 19 | 10 | 65 Gew.-%,y=30,z=30 | 35 Gew.-%,x=29 | 5,0 | |
| (Einfluß des Polyethers) | | | | | | |
| 2,0 | 19 | 10 | 55 Gew.-%,y=25,z=25 | 45 Gew.-%,x=15 | 28,0 | 0,80 |
| 2,0 | 19 | 10 | 75 Gew.-%,y=25,z=25 | 25 Gew.-%,x=15 | 11,0 | 0,50 |
| 2,0 | 19 | 10 | 65 Gew.-%,y=38,z=38 | 35 Gew.-%,x=15 | 14,5 | |
| 2,0 | 19 | 10 | 80 Gew.-%,y=38,z=38 | 20 Gew.-%,x=15 | 9,8 | |

Die Tabelle zeigt, daß sich die Grenzflächenspannung zwischen Polypropylenwachs und Voranol und parallel damit die Größe der Wachsteilchen durch Verwendung der ternären Copolymeren als Compatibilizer deutlich reduzieren läßt. Mit einem optimierten Copolymeren in einer Konzentration von 2 Gew.-% kann die Teilchengröße auf fast ein fünfzigstel des ursprünglichen Wertes reduziert werden.

Beispiel 4

Reduktion der Grenzflächenspannung in dem Polymersystem Polyethylen/Polycaprolacton durch Verwendung der erfindungsgemäßen Compatibilizer

Als Polymere werden gewählt:

ein Polyethylenwachs, Erweichungspunkt 100 bis 110°C, Molekulargewicht 2000 bis 3000, im Handel unter der Bezeichnung PE 520 von der Firma Farbwerke Hoechst AG erhältlich
und
ein Polycaprolacton, Erweichungspunkt 40 bis 50°C, Molekulargewicht 2000, im Handel unter der Bezeichnung CAPA 225 von der Firma Interox erhältlich.

Die hier verwendeten Compatibilizer sind bereits in Beispiel 1 beschrieben. Als Vergleich wird außerdem ein A-B-Blockcopolymer Polyethylen-Polyethylenoxid (Molekulargewicht der beiden Blöcke jeweils 700) herangezogen, das im Handel unter der Bezeichnung Unithox 750 von der Firma Petrolite erhältlich ist.

Die Messung der Grenzflächenspannung erfolgt nach der bereits in Beispiel 3 beschriebenen Sessile Drop-Methode bei 130°C. In allen Fällen beträgt die Compatibilizerkonzentration 2 Gew.-%.

| Siloxanrückgrat | | Seitenketten | | σ(mN/m) |
|---|---|---|---|---|
| a | m+n | $A^1$ | $B^1$ | |
| 19 | 10 | 85 Gew.-%,y=13,z= 4 | 15 Gew.-%,x=15 | 3,1 |
| 19 | 10 | 70 Gew.-%,y=13,z= 4 | 30 Gew.-%,x=15 | 2,6 |
| 19 | 10 | 85 Gew.-%,y= 4,z=11 | 15 Gew.-%,x=15 | 4,1 |
| 19 | 10 | 70 Gew.-%,y= 4,z=11 | 30 Gew.-%,x=15 | 3,8 |
| 19 | 10 | 75 Gew.-%,y=25,z=25 | 25 Gew.-%,x=15 | 1,8 |
| 19 | 10 | 55 Gew.-%,y=25,z=25 | 45 Gew.-%,x=15 | 1,4 |
| Unithox 750 | | | | 4,4 |
| ohne Compatibilizer | | | | 7,6 |

Diese Ergebnisse zeigen, daß alle verwendeten erfindungsgemäßen Compatibilizer in der Lage sind, die Grenzflächenspannung zwischen Polyethylen und Polycaprolacton stärker zu erniedrigen als ein vergleichbares A-B-Blockcopolymer. Im einzelnen lassen sich folgende Schlußfolgerungen für die Auswahl eines besonders geeigneten Compatibilizers ziehen:

- Bei gleicher Länge ist ein Rest $A^1$ mit $y > z$ effektiver als mit $y < z$.
- Ein zu hohes Verhältnis $A^1/B^1$ ist ungünstig.
- Ein längerer Rest $A^1$ ist günstig.

<u>Beispiel 5</u>

Verringerung der Partikelgröße in Polymerblends aus Polyamid/Polypropylen durch Anwendung der erfindungsgemäßen Compatibilizer

Als Polymere werden gewählt:

ein Nylon 6, ungefüllt, Elastizitätsmodul 1,8 GPa, Zugfestigkeit 70 MPa, Bruchdehnung 100 %, das unter dem Namen MBM bei der Firma Allied erhältlich ist
und
ein Polypropylen, ungefüllt, Dichte 0,903 $g/cm^3$ bei 20°C, Schmelzindex 4,0 g/10 min (ASTM D 1238), das unter dem Namen Profax 6523 bei der Firma Himont erhältlich ist.

Compatibilizer

Als erfindungsgemäße Compatibilizer werden ternäre Copolymere der Formel (I), wobei

b = 0 ist,
die Reste $R^1$ gleich Methylreste und die Reste $R^2$ gleich Methylreste oder Reste $A^1$ oder Reste $B^1$,

wobei

Rest $A^1$ gleich

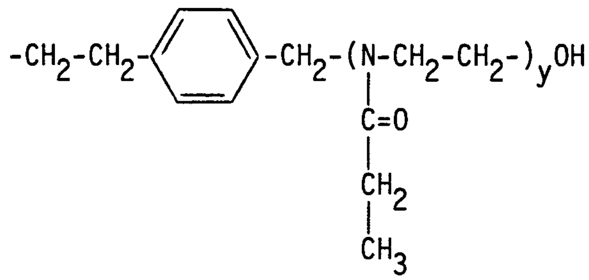

und Rest $B^1$ gleich

$$-(CH_2-)_xCH_3$$

ist,

sind, verwendet. Die Reste $A^1$ erhöhen die Mischbarkeit und damit die Verträglichkeit des ternären Copolymers mit dem Polyamid, die Reste $B^1$ entsprechend mit dem Polypropylen.

Herstellung der Polymerblends

Die Polymerpellets werden 24 h bei 100°C in einem Heißlufttrockner MCD2001 der Firma Novatec getrocknet. Die Blends werden in einem Extruder mit corotierenden Doppelschnecken, der unter der Bezeichnung ZSK-30 bei der Firma Werner & Pfleiderer kommerziell erhältlich ist, hergestellt. Dabei wird ein Zuführungssystem T-20 der Firma K-Tron und eine Pelletiermaschine Bronco II Model 160 der Firma Killion verwendet. Die Prozeßparameter des Extruders sind 230°C und 200 U/min. Die Verweilzeit im Extruder beträgt zwischen 3 und 5 Minuten.

Jedes Additiv wird zunächst in einer Konzentration von 2,5 Gew.-% in das Polyamid eingebracht. In einem zweiten Schritt wird aus diesen Vorblends mit Polypropylen und gegebenenfalls mit Polyamid ein Blend mit der gewünschten Zusammensetzung hergestellt.

Bestimmung der Teilchengrößen

Zur Bestimmung der Größe der Polypropylendomänen wird ein Lichtmikroskop vom Typ BHS der Firma Olympus verwendet, das mit einem Heiztisch (CD-50-600) der Firma Creative Devices Inc. und einem Hoffman Modulation Contrast-Objektiv (Vergrößerung 30x) der Firma Modulation Optics Inc. ausgerüstet ist. Die Proben werden bei 230°C, oberhalb des Schmelzpunktes der Polymeren, untersucht.

Die folgende Tabelle zeigt die Größe der Polypropylendomänen in Polymerblends aus 80 Teilen Nylon MBM und 20 Teilen Profax 6523 unter Verwendung verschiedener erfindungsgemäßer Copolymere in unterschiedlichen Konzentrationen. In einem entsprechenden Kontrollblend ohne Compatibilizer wird eine Domänengröße von 10 bis 20 µm bestimmt.

| Siloxanrückgrat | | Seitenketten | | Domänengrößen (µm) bei Compatibilzergehalt von (Gew.-%) | | |
|---|---|---|---|---|---|---|
| a | m+n | $A^1$ | $B^1$ | 0,1 | 0,5 | 2,0 |
| 19 | 10 | 70 Gew.-%,y=20 | 30 Gew.-%,x=15 | 8-12 | 5-10 | 5-10 |
| 19 | 10 | 80 Gew.-%,y=20 | 20 Gew.-%,x=15 | - | 4- 8 | - |
| 19 | 10 | 85 Gew.-%,y=20 | 15 Gew.-%,x=15 | 8-12 | 5-10 | 1- 5 |
| 19 | 10 | 90 Gew.-%,y=20 | 10 Gew.-%,x=15 | - | 5-10 | - |
| 19 | 10 | 95 Gew.-%,y=20 | 5 Gew.-%,x=15 | 8-12 | 5-12 | 5-10 |

Alle Compatibilizer bewirken in den verwendeten Konzentrationen eine Reduktion der Polypropylenpartikelgröße. Besonders effektiv sind die Compatibilizer mit 80 bis 85 Gew.-% Polyethyloxazolin ($A^1$). Die Reduktion der Teilchengröße wird mit steigender Compatibilizerkonzentration ausgeprägter. Als Beispiel sind lichtmikroskopische Aufnahmen des Polymerblends ohne Compatibilizer (Fig. 6) und mit 2 Gew.-% des erfindungsgemäßen Compatibilizers mit a = 19, m+n = 10 , 85 Gew.-% $A^1$ (y = 20) und 15 Gew.-% $B^1$ (x = 15) (Fig. 7) gezeigt.

Beispiel 6

Verringerung der Partikelgröße in Polymerblends im System Polyamid/Polypropylen durch Anwendung der erfindungsgemäßen Compatibilizer

Polymersystem

Als Polymere werden gewählt:

Nylon MBM aus Beispiel 5
und
ein Polypropylen, Kristallitschmelztemperatur 164 bis 168°C, Dichte 0,91 g/cm$^3$ bei 20°C, Schmelzindex 40 g/10 min (DIN 53 735, Code M), im Handel unter der Bezeichnung Vestolen 2000 von der Firma Hüls AG erhältlich.

Compatibilizer

Als erfindungsgemäße Compatibilizer werden

ein in Beispiel 1 beschriebenes ternäres Copolymer mit Polyetherresten $A^1$ und Alkylresten $B^1$,

wobei

a = 34, m+n = 8 , x = 25, y = 23, z = 0 ist,
75 Gew.-% der Seitenketten $A^1$ und $B^1$ gleich $B^1$ und 25 Gew.-% gleich $A^1$ sind,

welches im folgenden als Compatibilizer 1 bezeichnet wird, sowie ein in Beispiel 5 beschriebenes ternäres Copolymer mit Polyethyloxazolinresten $A^1$ und Alkylresten $B^1$,
wobei

x = 15, y = 20 und 90 Gew.-% der Seitenketten $A^1$ und $B^1$ gleich $A^1$ und 10 Gew.-% gleich $B^1$ sind,

welches im folgenden als Compatibilizer 2 bezeichnet wird, verwendet.

Herstellung der Blends

Die Polymerpellets werden 24 h bei 100°C in einem Heißlufttrockner MCD2001 der Firma Novatec getrocknet. Die Blends werden in einem Extruder mit corotierenden Doppelschnecken, der unter der Bezeichnung ZSK-30 bei der Firma Werner & Pfleiderer kommerziell erhältlich ist, hergestellt. Dabei wird ein Zuführungssystem T-20 der Firma K-Tron und eine Pelletiermaschine Bronco II Model 160 der Firma Killion verwendet. Alle Komponenten werden vor der Einspeisung miteinander vermengt. Die Prozeßparameter des Extruders sind 230°C und 200 U/min.

Vor der Weiterverarbeitung werden die erhaltenen Blend-Pellets 1 Stunde bei 130°C getrocknet und in einer Heißpresse Laboratory Press 2629 der Firma Carver Inc. bei 250°C zu einer Platte mit einer mittleren Dicke von 0,5 mm gepreßt.

Bestimmung von Teilchengrößen und Additivverteilung

Zur Bestimmung des mittleren Durchmessers d von Polypropylenteilchen in den Blends werden die Platten aus den Polymerblends in flüssigem Stickstoff abgekühlt, gebrochen, die Bruchflächen mit Gold bedampft und in einem Rasterelektronenmikroskop des Typs JEOL JSM 35C untersucht. Es wird mit einer Beschleunigungsspannung von 15 keV gearbeitet. Mit einem energiedispersiven Röntgenfluoreszenzanalysator wird der Siliciumgehalt in Nähe der Grenzfläche zwischen Polyamid und Polypropylen und in der Polyamidmatrix bestimmt. Zur Charakterisierung wird das Verhältnis f aus der Signalhöhe an der Grenzfläche und der Signalhöhe in der Polyamidmatrix verwendet.

Ergebnisse

Es werden Blends aus 80 Gew.-% Polyamid und 20 Gew.-% Polypropylen mit und ohne Compatibilizer untersucht.

| Compatibilizer | d(μm) | f |
|---|---|---|
| ohne | 12 | - |
| 2 % Comp. 1 | 8 | 2,72 |
| 2 % Comp. 2 | 3 | 1,42 |

Beide Compatibilizer verringern die Teilchengröße, wobei Compatibilizer 2 eine bessere Compatibilisierung bewirkt. Polyethyloxazoline, wie in Compatibilizer 2 als Reste vorhanden, sind (zumindest wenn man niedrige Molekulargewichte betrachtet) mischbar mit Polyamid-6, wohingegen hydrophile Polyether, wie in Compatibilizer 1 als Reste vorhanden, praktisch nicht mit Polyamid-6 mischbar sind. Dies macht die Vorteile von Compatibilizer 2 in dem betrachteten Polymersystem verständlich. Beide Compatibilizer reichern sich an der Grenzfläche zwischen den Polymeren an, wie die f-Werte größer als Eins andeuten.

In den Fig. 8, 9 und 10 werden rasterelektronenmikroskopische Aufnahmen von diesen Blends gezeigt. Im Falle des Blends ohne Compatibilizer ist eine Vergröberung der Polypropylenteilchen durch Koaleszenz am oberen und unteren Rand (den Probenoberflächen vor Erzeugung des Gefrierbruchs) erkennbar. Die Compatibilizer 1 und 2 bewirken eine Koaleszenzstabilisierung.

Beispiel 7

Verringerung der Partikelgröße und Koaleszenzstabilisierung in dem Polymersystem Polypropylen/Polyamid durch Verwendung der erfindungsgemäßen Compatibilizer

Als Polymere werden gewählt:

Polypropylen aus Beispiel 6
und
Nylon aus Beispiel 5.

Compatibilizer

Als erfindungsgemäße Compatibilizer werden ternäre Copolymere verwendet, deren Struktur bereits in Beispiel 5 beschrieben worden ist: Compatibilizer 2 aus Beispiel 6 und ein Copolymer mit a = 19, m+n = 10 , 35 Gew.-% $A^1$ (y = 5) und 65 Gew.-% $B^1$ (x = 15), im folgenden als Compatibilizer 3 bezeichnet.

Herstellung der Polymerblends

Die Blends werden in einem Laborkneter mit gegenläufig rotierenden Schrauben, der unter der Bezeichnung Rheomix 600 bei der Firma Haake kommerziell erhältlich ist, hergestellt. Die Polymerpellets werden für 12 h bei 100°C in einem Vakuumofen getrocknet. Die Herstellung der Blends Polypropylen/Polyamid im Gewichtsverhältnis 80/20 erfolgt bei einer Temperatur von 250°C. Zunächst werden 48 g Polypropylen aufgeschmolzen und die berechnete Menge Compatibilizer (2 Gew.-%, bezogen auf die Gesamtmenge Polymer) eingebracht. Danach werden 12 g Polyamid zugegeben. Nach dem vollständigen Schmelzen wird die Polymermischung für 3 Minuten bei 200 U/min geknetet.

Bestimmung der Teilchengrößen

Die Bestimmung der Größe der Polyamiddomänen in den Polymerblends erfolgt mit einem Lichtmikroskop wie in Beispiel 5 beschrieben.

Ergebnis

Bei dem Kontrollblend ohne Compatibilizer erfolgt schon beim Aufschmelzen der Probe eine sehr schnelle Koaleszenz der Polyamidpartikel zu Domänen von etwa 35 µm Durchmesser (Fig. 11). Compatibilizer 2, der in einem Blend mit Polyamid als kontinuierlicher Phase (Polyamid/Polypropylen im Gewichtsverhältnis 80/20, siehe Beispiel 6) eine deutliche Reduzierung der Polypropylenpartikelgröße bewirkt, hat hier fast keinen Effekt; die Domänengröße beträgt etwa 20 µm (Fig. 12). Compatibilizer 3 bewirkt hingegen eine deutliche Koaleszenzstabilisierung. Selbst beim Tempern einer Probe bei 230°C für 30 Minuten erfolgt keine Koaleszenz; die Domänengröße beträgt 5 bis 10 µm (Fig. 13). Das Gewichtsverhältnis der Seitenketten $A^1/B^1$ spielt damit eine analoge Rolle wie die Hydrophil/Lipophil-Balance bei der Stabilisierung von Öl-in-Wasser- (O/W) und Wasser-in-Öl-Emulsionen (W/O).

Fig. 11
Lichtmikroskopische Aufnahme eines Blends aus Polypropylen/Polyamid im Gewichtsverhältnis 80/20 ohne Compatibilizer bei 230°C.
Fig. 12
Lichtmikroskopische Aufnahme eines Blends aus Polypropylen/Polyamid im Gewichtsverhältnis 80/20 mit Compatibilizer 2 bei 230°C.
Fig. 13
Lichtmikroskopische Aufnahme eines Blends aus Polypropylen/Polyamid im Gewichtsverhältnis 80/20 mit Compatibilizer 3 bei 230°C.

Beispiel 8

Verringerung der Partikelgröße und Koaleszenzstabilisierung in dem Polymersystem Polypropylen/Polybutylenterephthalat durch Verwendung der erfindungsgemäßen Compatibilizer

Als Polymere wurden gewählt:

Polypropylen aus Beispiel 6
und
ein Polybutylenterephthalat, Schmelzpunkt 228°C, das unter dem Namen Celanex 2000 bei der Firma Farbwerke Hoechst kommerziell erhältlich ist.

Compatibilizer

Als erfindungsgemäßer Compatibilizer wird ein ternäres Copolymer verwendet, dessen Struktur bereits in Beispiel 1 beschrieben worden ist: das Copolymer mit a = 49, m+n = 25 , 25 Gew.-% $A^1$ (y = 9, z = 0) und 75 Gew.-% $B^1$ (x = 15) wird im folgenden als Compatibilizer 4 bezeichnet.

Herstellung der Polymerblends

Die Blends werden in einem Laborkneter mit gegenläufig rotierenden Schrauben, der unter der Bezeichnung Rheomix 600 bei der Firma Haake kommerziell erhältlich ist, hergestellt. Die Polymerpellets werden für 12 h bei 100°C in einem Vakuumofen getrocknet. Die Herstellung der Blends Polypropylen/Polybutylenterephthalat im Gewichtsverhältnis 80/20 erfolgt bei einer Temperatur von 250°C. Zunächst werden 48 g Polypropylen aufgeschmolzen und die berechnete Menge Compatibilizer (2 Gew.-%, bezogen auf die Gesamtmenge Polymer) eingebracht. Danach werden 12 g Polybutylenterephthalat zugegeben. Nach dem vollständigen Schmelzen wird die Polymermischung für 3 Minuten bei 200 U/min geknetet.

Bestimmung der Teilchengrößen

Die Bestimmung der Größe der Polybutylenterephthalatdomänen in den Polymerblends erfolgt mit einem Lichtmikroskop wie in Beispiel 5 beschrieben.

Ergebnis

Bei dem Kontrollblend ohne Compatibilizer beträgt die Größe der Polybutylenterephthalatdomänen etwa 5 µm (Fig. 14 A). Beim Aufschmelzen der Probe über den Schmelzpunkt des Polyesters erfolgt jedoch eine sehr schnelle Koaleszenz der Polybutylenterephthalatpartikel zu Domänen von etwa 20 µm Durchmesser (Fig. 14 B). Durch den Zusatz von 2 Gew.-% Compatibilizer 4 wird die Domänengröße auf etwa 2 µm reduziert (Fig. 15 A). Darüber hinaus bewirkt dieser Compatibilizer eine deutliche Koaleszenzstabilisierung. Selbst beim Tempern einer Probe bei 235°C für 30 Minuten erfolgt kaum Koaleszenz; die Domänengröße beträgt dann etwa 5 µm (Fig. 15 B).

Fig. 14
Lichtmikroskopische Aufnahme eines Blends aus Polypropylen/Polybutylenterephthalat im Gewichtsverhältnis 80/20 ohne Compatibilizer bei 170°C (a) und 235°C (B).
Fig. 15
Lichtmikroskopische Aufnahme eines Blends aus Polypropylen/Polybutylenterephthalat im Gewichtsverhältnis 80/20 mit Compatibilizer 4 bei 170°C (A) und nach Tempern für 30 Minuten bei 235°C (B).

**Patentansprüche**

1. Ein Polymerblend, bestehend aus mindestens zwei nicht miteinander mischbaren und sich in ihrer Polarität bzw. Hydrophilie unterscheidenden Polymeren aus der Gruppe der Polyolefine und deren halogenierte Derivate sowie Polyaromaten, Polyacrylate, Polyester, Polyamide, Polyether und Polyurethane, und mindestens einem Compatibilizer, dadurch gekennzeichnet, daß als Compatibilizer ein ternäres Copolymer, welches ein Siloxangerüst enthält, das für die Unverträglichkeit des Compatibilizers mit den anderen Komponenten des Polymerblends verantwortlich ist, und die Struktur

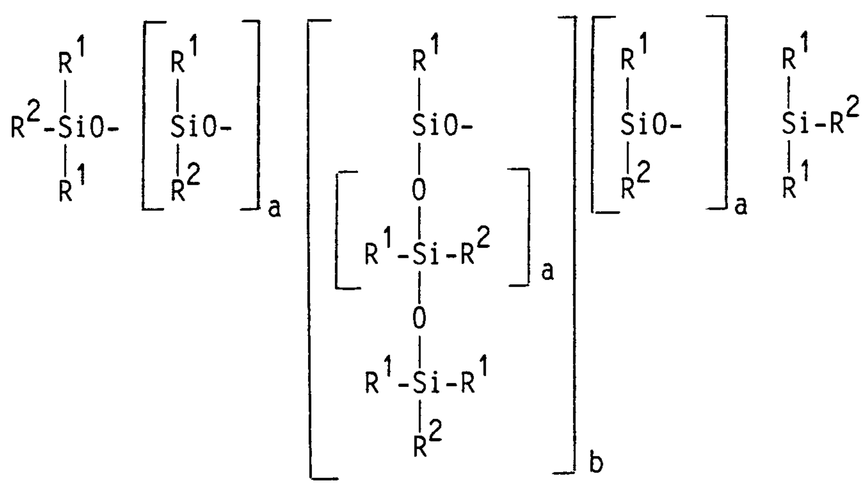

besitzt, wobei

$R^1$ Alkyl- oder Phenylreste bedeuten, jedoch mindestens 90 % der Reste $R^1$ Methylreste sind,

$R^2$ die Bedeutung der Reste $R^1$ haben oder die Reste $A^1$ oder $B^1$ sind, mit der Maßgabe, daß im durchschnittlichen Molekül mindestens 1 Rest $R^2$ ein Rest $A^1$ und 1 Rest $R^2$ ein Rest $B^1$ ist, wobei

$A^1$ ein polarer Polyetherrest mit der Struktureinheit $-(C_2H_4O-)_n(C_3H_6O-)_m$, wobei n = 2 bis 200 und m = 0 bis 100 ist, ein Polyalkyloxazolinrest, ein Polyesterrest oder ein mit Hydroxy-, Amino-, Carboxy-, Sulfonat oder Sulfatgruppen polar funktionalisierter Alkylrest und

$B^1$ ein Polyethylen-, Polypropylen- oder Polybutylenrest bzw. deren Copolymere, ein alkylsubstituierter, unpolarer Polyetherrest mit der Struktureinheit $-(CH_2-CHR^3-O-)$, wobei $R^3$ einen Alkylrest mit 1 bis 20 Kohlenstoffatomen bedeutet, oder ein Polystyrolrest ist,

a einen Wert von 1 bis 1000 und

b einen Wert von 0 bis 10 hat,

in einer Konzentration von 0,01 bis 10 Gew.-%, bezogen auf Polymerblend, enthalten ist.

2. Ein Polymerblend nach Anspruch 1, dadurch gekennzeichnet, daß bei dem ternären Copolymer der Index a = 1 bis 200, der Index b = 0 ist und die Reste $R^1$ Methylreste sind.

## Claims

1. Polymer blend comprising at least two polymers which are immiscible with one another, differ in their polarity or hydrophilicity and are selected from the group consisting of polyolefins and their halogenated derivatives and also polyaromatics, polyacrylates, polyesters, polyamides, polyethers and polyurethanes, and at least one compatibilizer, characterized in that as compatibilizer use is made of a ternary copolymer containing a siloxane framework which is responsible for the incompatibility of the compatibilizer with the other components of the polymer blend and having the structure

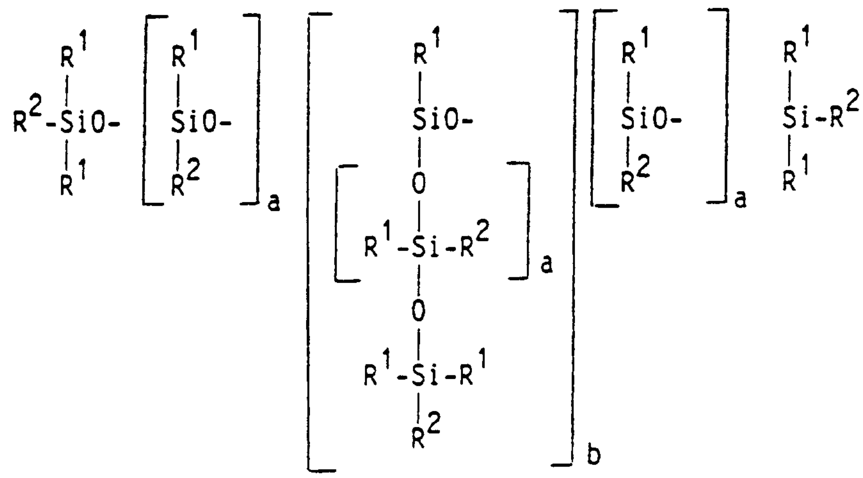

where

$R^1$ are alkyl or phenyl radicals, but at least 90% of the radicals $R^1$ are methyl radicals,

$R^2$ are as defined for the radicals $R^1$ or are radicals $A^1$ or $B^1$, with the proviso that in the average molecule at least 1 radical $R^2$ is a radical $A^1$ and 1 radical $R^2$ is a radical $B^1$, where

$A^1$ is a polar polyether radical having the structural unit $-(C_2H_4O-)_n(C_3H_6O-)_m$, where n = 2 to 200 and m = 0 to 100, a polyalkyloxazoline radical, a polyester radical or an alkyl radical given polar functionality by hydroxy, amino, carboxy, sulphonate or sulphate groups and

$B^1$ is a polyethylene, polypropylene or polybutylene radical or a copolymer thereof, an alkyl-substituted, non-polar polyether radical having the structural unit $-(CH_2-CHR^3-O-)$, where $R^3$ is an alkyl radical having from 1 to 20 carbon atoms or is a polystyrene radical,

a has a value of from 1 to 1000 and

b has a value of from 0 to 10,

present in a concentration of from 0.01 to 10 % by weight, based on polymer blend.

2. Polymer blend according to Claim 1, characterized in that in the ternary copolymer the index a = 1 to 200, the index b = 0 and the radicals $R^1$ are methyl radicals.

**Revendications**

1. Mélange de polymères formé d'au moins deux polymères non miscibles entre eux et ayant une polarité et une hydrophilie différentes, choisis dans le groupe constitué par les polyoléfines et leurs dérivés halogénés ainsi que leurs composés polyaromatiques, les polyacrylates, les polyesters, les polyamides, les polyéthers et les polyuréthanes, et au moins un agent compatibilisant, caractérisé en ce qu'il contient, comme agent compatibilisant, un copolymère ternaire qui contient un squelette siloxane qui est responsable de l'incompatibilité de l'agent compatibilisant avec les autres composants du mélange de polymères et qui a la structure suivante :

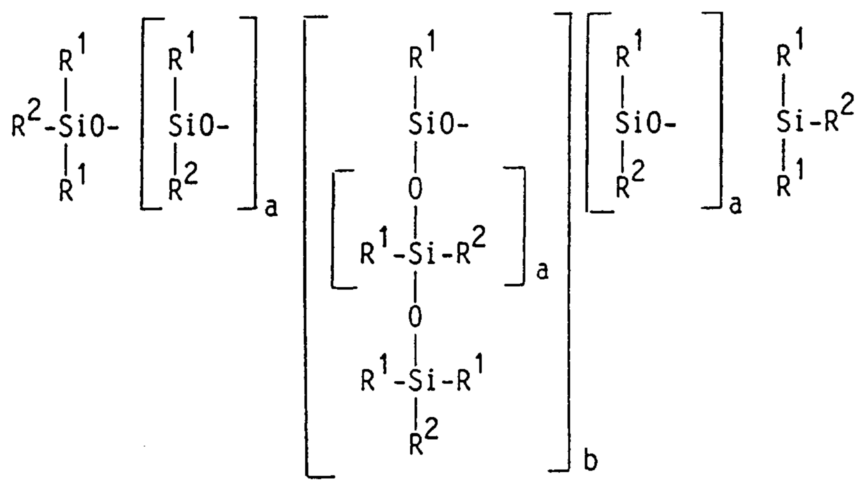

où

les restes $R^1$ signifient des restes alkyles ou phényle, au moins 90 % des restes $R^1$ signifiant toutefois un reste méthyle,
les restes $R^2$ ont la signification des restes $R^1$ ou sont les restes $A^1$ ou $B^1$, avec la condition qu'au moins 1 reste $R^2$ soit un reste $A^1$ et que 1 reste $R^2$ soit un reste $B^1$ dans la molécule moyenne,

$A^1$ étant un reste de polyéther polaire ayant la structure unitaire $-(C_2H_4O-)_n(C_3H_6O-)_m$, où n = 2 à 200 et m = 0 à 100, un reste polyalkyloxazoline, un reste polyester ou un reste alkyle à fonctionnalité polaire avec des groupes hydroxy, amino, carboxy, sulfonates ou sulfates, et
$B^1$ étant un reste polyéthylène, polypropylène ou polybutylène, ou des copolymères de ceux-ci, un reste polyéther non polaire substitué par un groupe alkyle, ayant la structure unitaire $-(CH_2-CHR^3-O-)$, où $R^3$ signifie un reste alkyle ayant de 1 à 20 atomes de carbone, ou un reste polystyrène,

a vaut de 1 à 1 000, et
b vaut de 0 à 10,

à une concentration de 0,01 à 10 % en poids par rapport au mélange de polymères.

2. Mélange de polymères selon la revendication 1, caractérisé en ce que, dans le copolymère ternaire, l'indice a = 1 à 200, l'indice b = 0, et les restes $R^1$ signifient le reste méthyle.

FIG.1

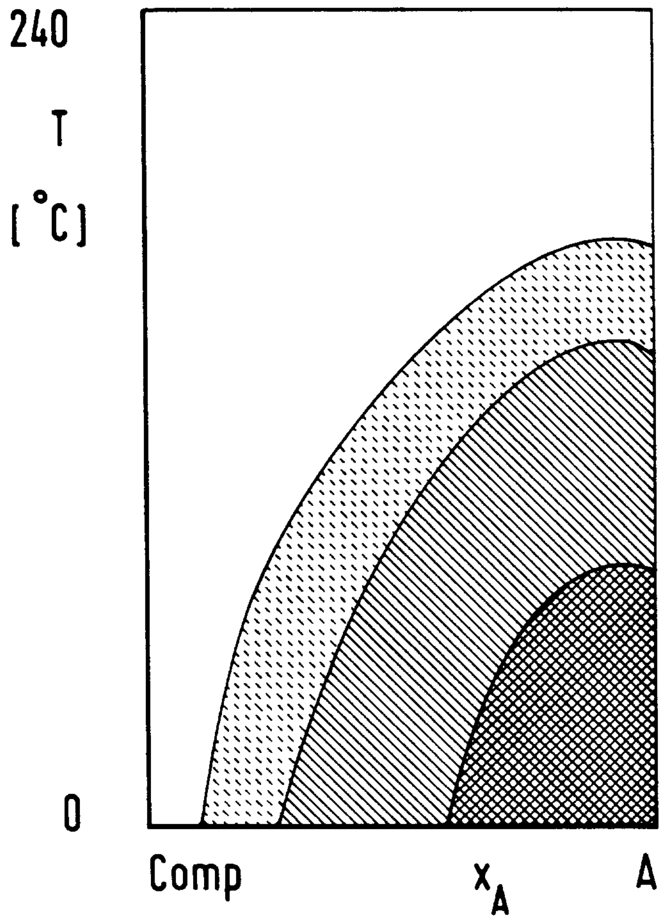


Comp : Compatibilizer
Form.[I] : a = 19, b = 0,
$R^1$, [α, ω]-$R^2$=$CH_3$,
$A^1$: y = 4, z = 11,
$B^1$: x = 15

- $4R^2$: $A^1$, $6R^2$: $B^1$
- $5R^2$: $A^1$, $5R^2$: $B^1$
- $6R^2$: $A^1$, $4R^2$: $B^1$

A : Voranol 3512

FIG. 2

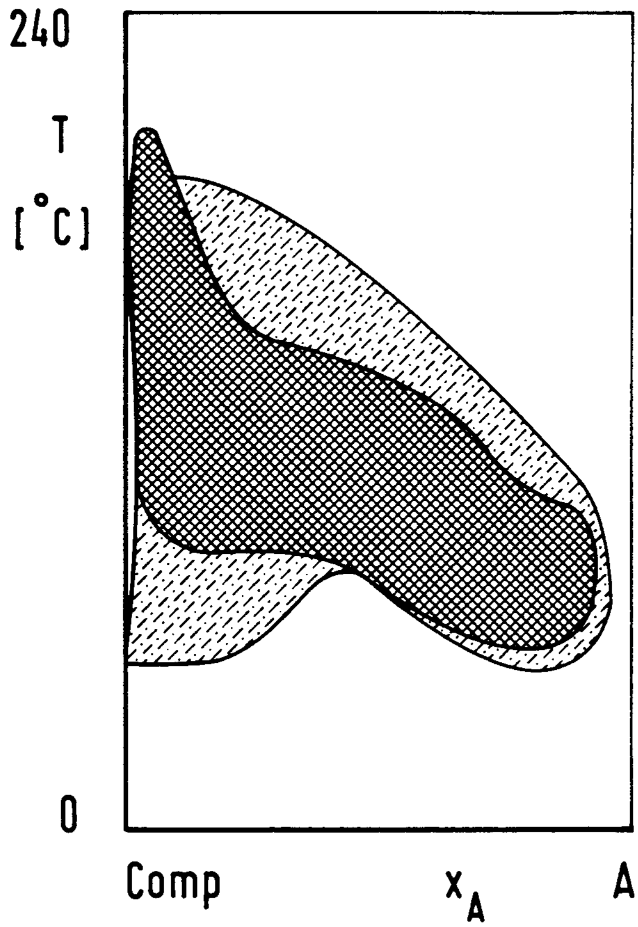


Comp : Compatibilizer
Form.[I]: a=4, b=0,
$R^1$,[α,ω]-$R^2$=$CH_3$,
$B^1$: x=15,
$1R^2=A^1$, $3R^2=B^1$
$A^1$ : y=25, z=25
$A^1$ : y=30, z=30

A : Voranol 3512

FIG.3

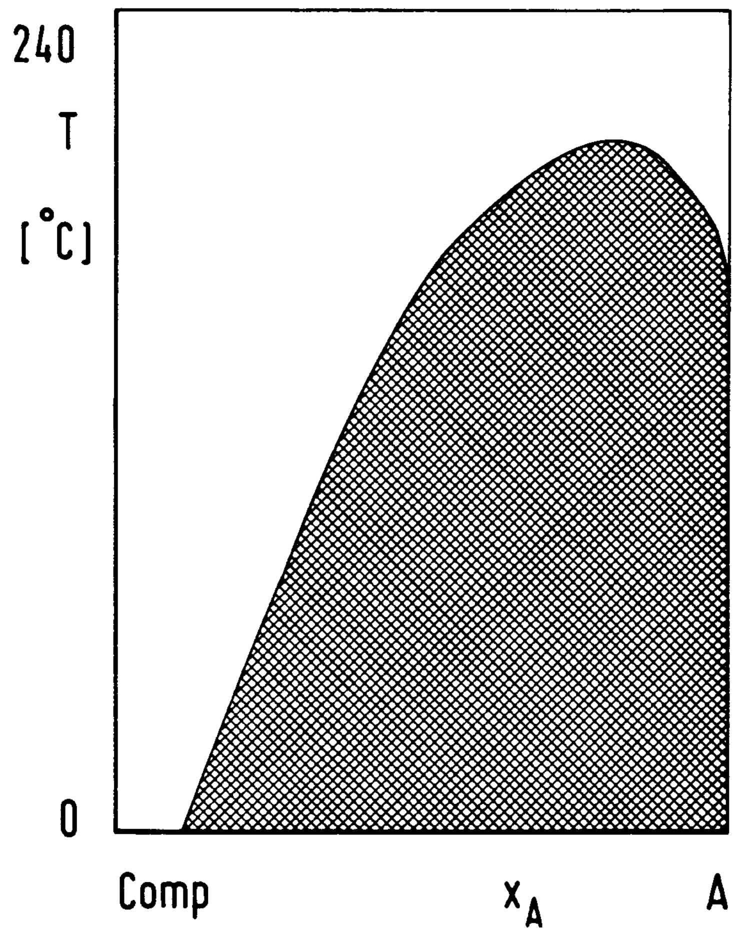


Comp: Compatibilizer
Form.[I]: a=19, b=0,
$R^1$, [α,ω]-$R^2$=$CH_3$,
$4A^1$: y=4, z=11
$6B^1$: x=15

A: Voranol 3512

FIG. 4

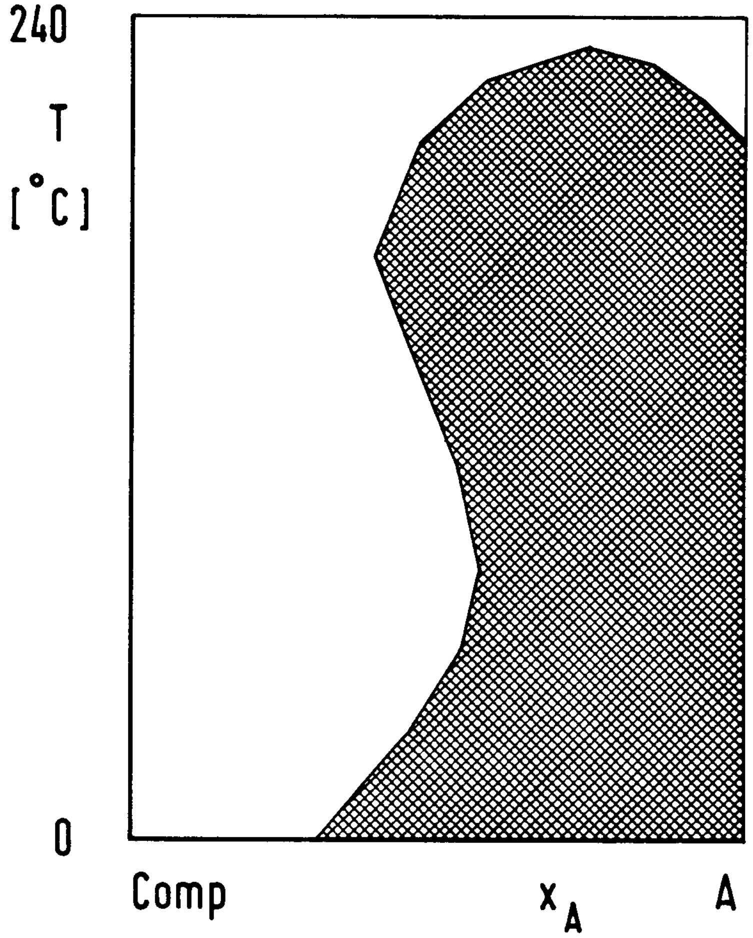


Comp : Compatibilizer
Form.[I] : a = 19, b = 0,
$R^1$, [α,ω]- $R^2$ = $CH_3$ ,
$3A^1$ : y = 14 , z = 14
$7B^1$ : x = 15

A : Voranol 3512

FIG.5

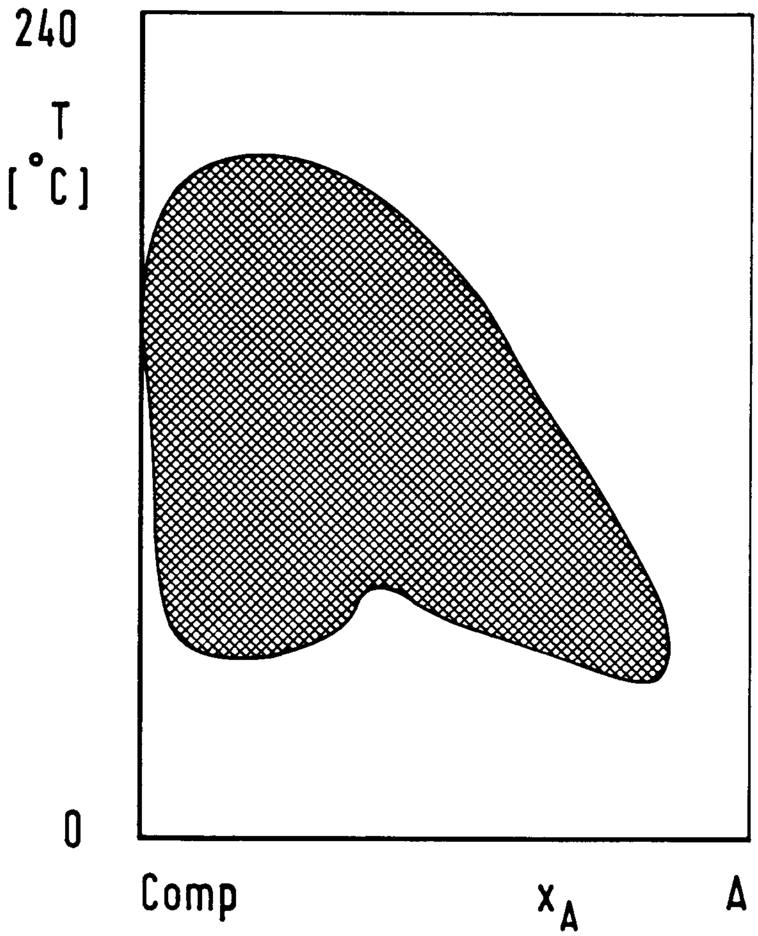


Comp: Compatibilizer
Form.[I]: a = 4, b=0,
$R^1$,[α,ω]-$R^2$=$CH_3$,
1$A^1$ : y= 25, z = 25
3$B^1$ : x = 15

A : Voranol 3512

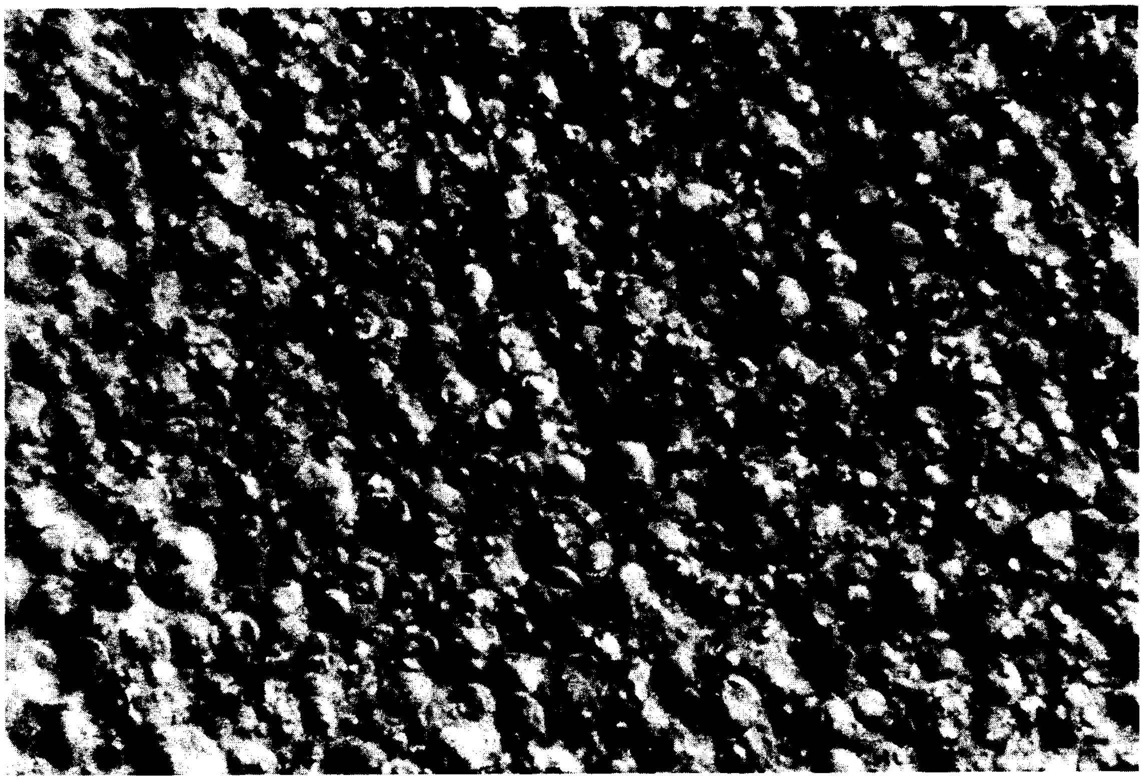

FIG.6

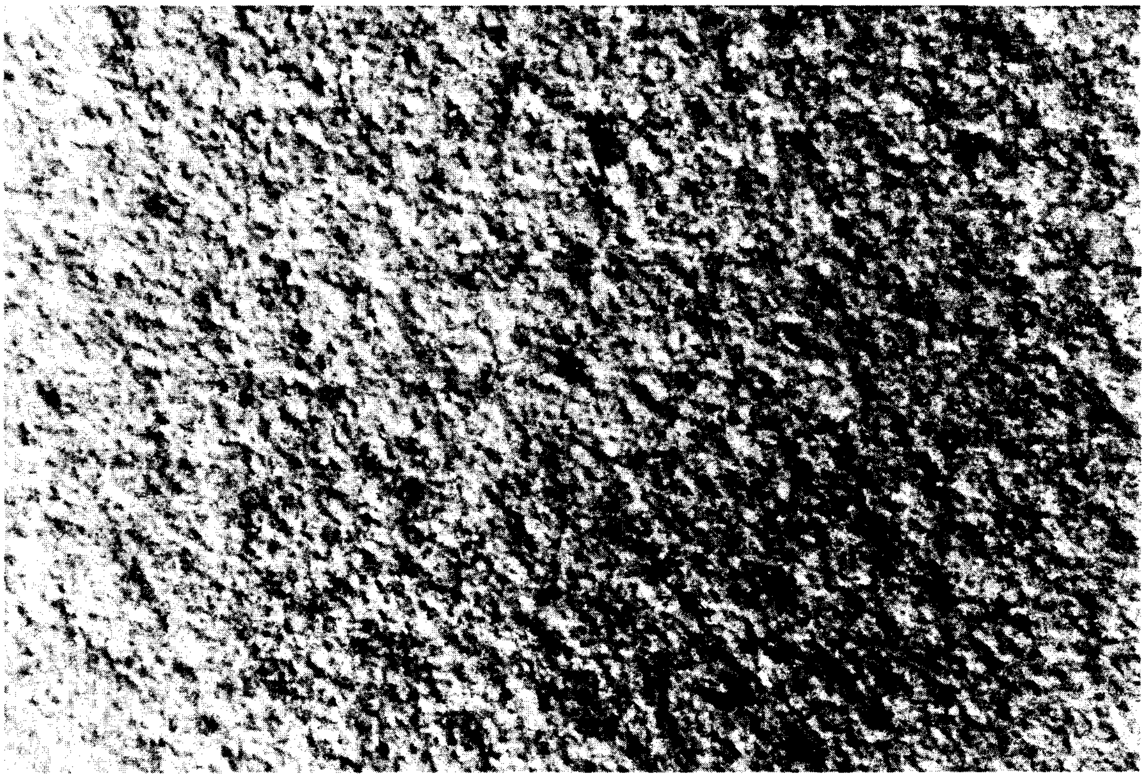

FIG.7

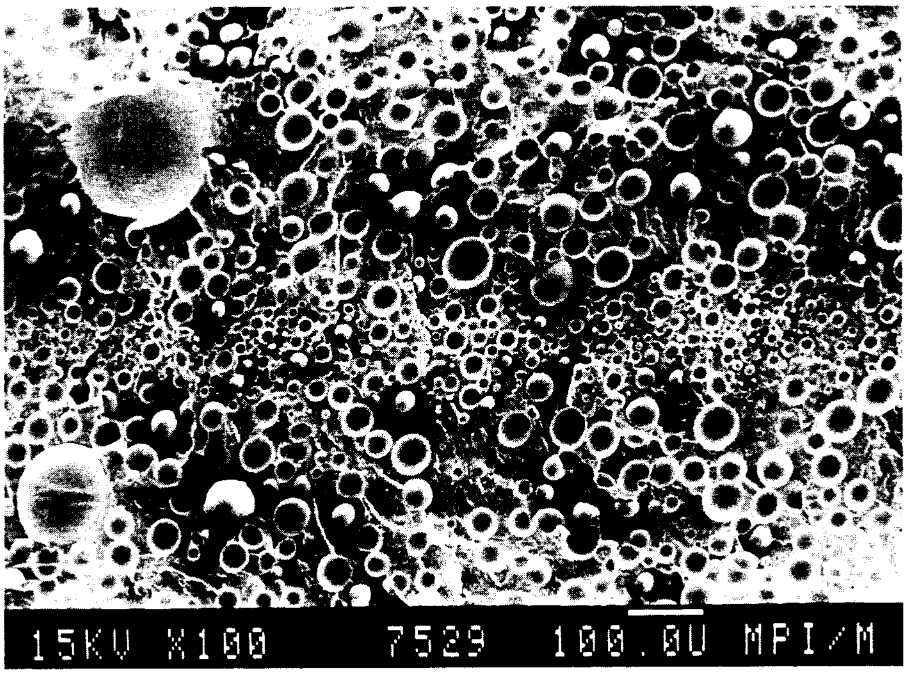


FIG.8

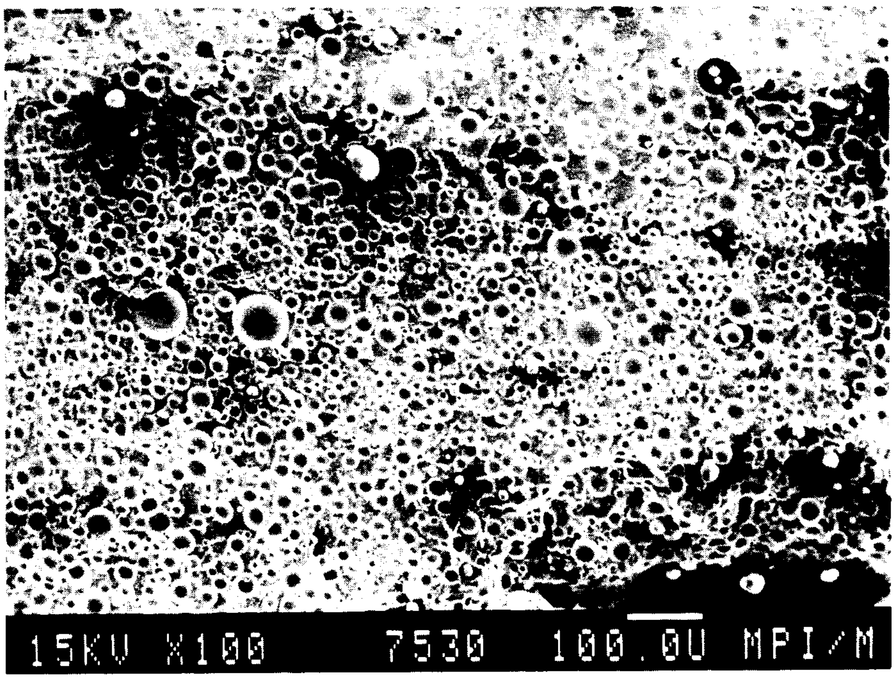


FIG.9

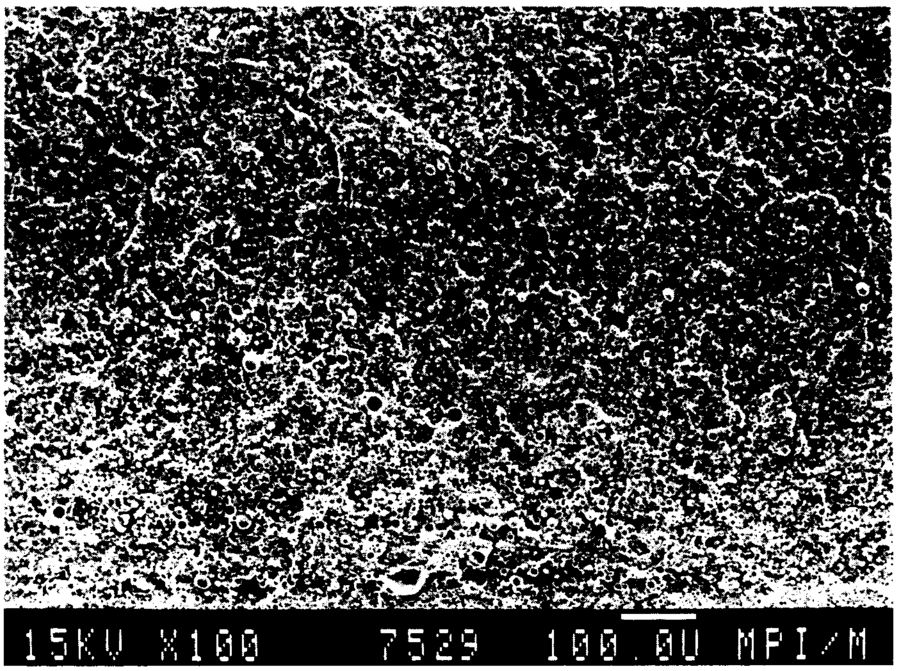


FIG.10

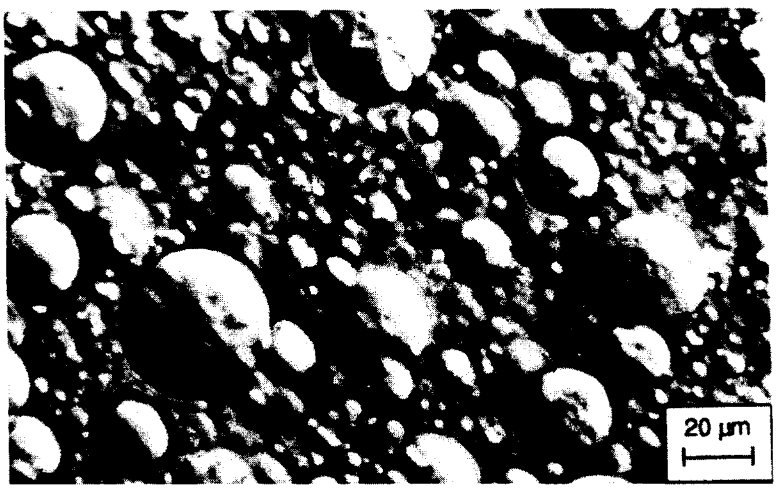


FIG. 11

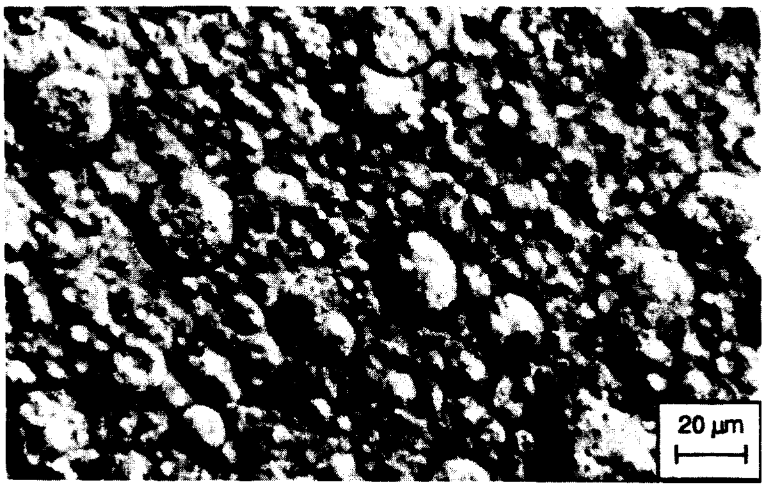


FIG. 12

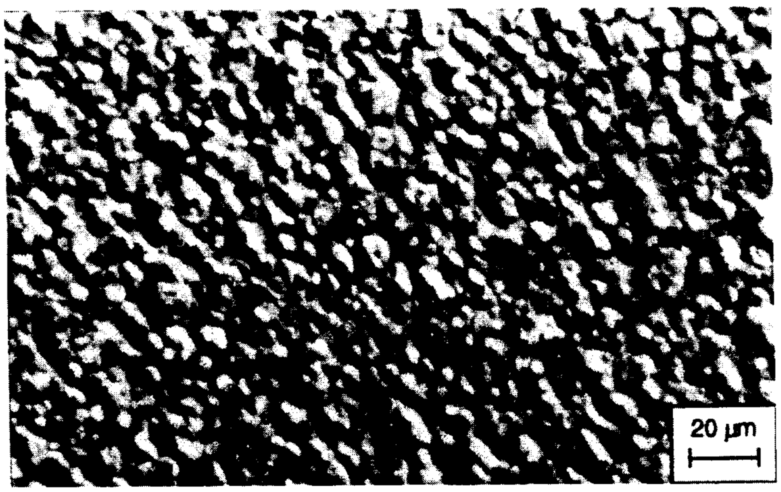


FIG. 13

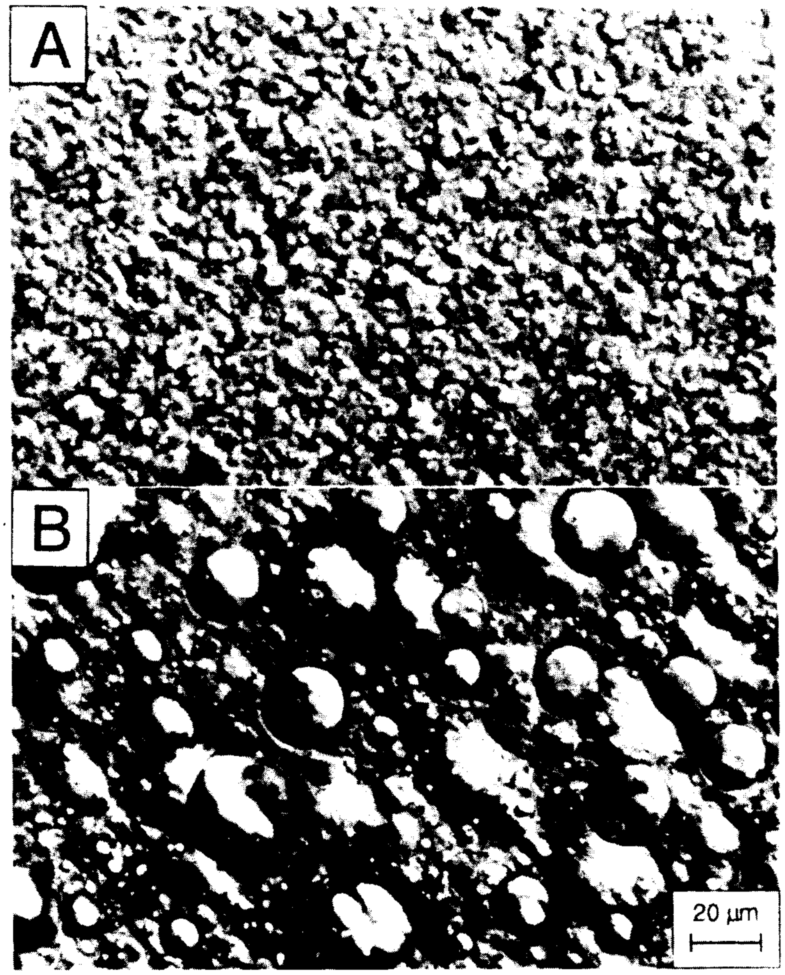


FIG. 14

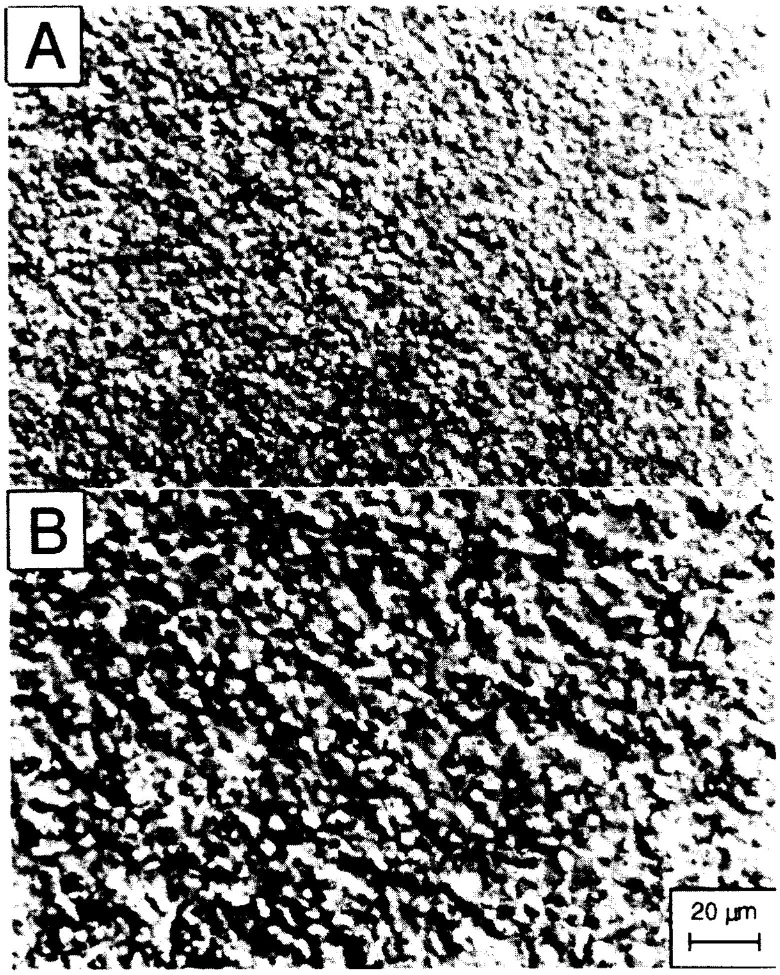


FIG. 15